(19) Europäisches Patentamt
European Patent Office
Office européen des brevets

(11) **EP 3 304 167 B1**

(12) **EUROPÄISCHE PATENTSCHRIFT**

(45) Veröffentlichungstag und Bekanntmachung des Hinweises auf die Patenterteilung:
**14.04.2021 Patentblatt 2021/15**

(51) Int Cl.:
**G02B 21/08** *(2006.01)*   **G02B 21/16** *(2006.01)*
**G02B 21/24** *(2006.01)*   **G02B 21/36** *(2006.01)*

(21) Anmeldenummer: **16727651.8**

(22) Anmeldetag: **25.05.2016**

(86) Internationale Anmeldenummer:
**PCT/EP2016/061742**

(87) Internationale Veröffentlichungsnummer:
**WO 2016/189012 (01.12.2016 Gazette 2016/48)**

(54) **ANORDNUNG UND VERFAHREN ZUR LICHTBLATTMIKROSKOPIE**

LIGHT SHEET MICROSCOPY ARRANGEMENT AND METHOD

AGENCEMENT ET PROCÉDÉ POUR LA MICROSCOPIE À FEUILLET LUMINEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2015 DE 102015209756**

(43) Veröffentlichungstag der Anmeldung:
**11.04.2018 Patentblatt 2018/15**

(73) Patentinhaber: **Carl Zeiss Microscopy GmbH**
**07745 Jena (DE)**

(72) Erfinder:
• **SIEBENMORGEN, Jörg**
**07743 Jena (DE)**
• **LIPPERT, Helmut**
**07745 Jena (DE)**
• **KALKBRENNER, Thomas**
**07745 Jena (DE)**
• **KLEPPE, Ingo**
**07749 Jena (DE)**
• **WOLLESCHENSKY, Ralf**
**07743 Jena (DE)**

(74) Vertreter: **Meyer, Jork**
**Carl Zeiss AG**
**Patentabteilung**
**Carl-Zeiss-Promenade 10**
**07745 Jena (DE)**

(56) Entgegenhaltungen:
**EP-A1- 2 535 754         WO-A1-2014/150536**
**WO-A2-2012/122027     DE-A1-102005 027 077**
**DE-A1-102007 017 598   DE-A1-102007 017 598**
**DE-A1-102012 020 240   US-A- 5 093 879**
**US-A1- 2012 049 087**

• **Kavya Mohan ET AL: "Three Dimensional Fluorescence Imaging Using Multiple Light-Sheet Microscopy", PLoS ONE, vol. 9, no. 6, 9 June 2014 (2014-06-09), page e96551, XP055277114, DOI: 10.1371/journal.pone.0096551**

**Beschreibung**

Die vorliegende Erfindung betrifft eine Anordnung zur Lichtblattmikroskopie mit einer Probenebene, mit einer Beleuchtungsvorrichtung, die eine Lichtquelle und eine Beleuchtungsoptik zur Erzeugung eines Lichtblatts zur Beleuchtung eines Streifens einer Probe und Anregung einer Fluoreszenzstrahlung enthält, und mit einer Detektionsvorrichtung, die einen Sensor mit einer Detektionsebene zur Detektion der Fluoreszenzstrahlung, eine Abbildungsoptik zur Abbildung der von der Probe abgestrahlten Fluoreszenzstrahlung auf den Sensor, und eine zum Lichtblatt senkrechte Detektionsachse enthält. Die vorliegende Erfindung betrifft weiterhin ein entsprechendes Verfahren zur Lichtblattmikroskopie.

Ein Mikroskop, bei dem der Beleuchtungsstrahlengang und der Detektionsstrahlengang im Wesentlichen senkrecht zueinander angeordnet sind, und mit dem die Probe mit einem Lichtblatt in der Fokusebene des Abbildungs- bzw. Detektionsobjektivs, d.h. senkrecht zu dessen optischer Achse, beleuchtet wird, ist für die Untersuchung von Proben nach dem Verfahren der Selective Plane Illumination Microscopy (SPIM), also der Lichtblattmikroskopie, ausgelegt. Durch die Beleuchtung mit einem Lichtblatt wird eine Fluoreszenzstrahlung in dem mit dem Lichtblatt beleuchteten Streifen der Probe erzeugt. Zum diesem Zwecke kann die Probe zusätzliche Farbstoffe enthalten, die zur Fluoreszenz geeignet sind. In Unterschied zur konfokalen Laser Scanning Mikroskopie (LSM), bei der eine dreidimensionale Probe in einzelnen unterschiedlich tiefen Ebenen Punkt für Punkt abgetastet wird, und die dabei gewonnenen Bildinformationen nachfolgend zu einer dreidimensionalen Abbildung der Probe zusammengesetzt werden, beruht die SPIM-Technologie auf der Weitfeldmikroskopie und ermöglicht die bildliche Darstellung der Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Eine der Hauptanwendungen der Lichtblattmikroskopie liegt in der Bildgebung mittelgroßer Organismen mit einer Größe von einigen $100 \mu m$ bis hin zu wenigen Millimetern. In der Regel werden diese Organismen in Agarose eingebettet, welche sich wiederum in einer Glaskapillare befindet. Die Glaskapillare wird von oben bzw. von unten in eine wassergefüllte Probenkammer eingebracht und die Probe ein Stück aus der Kapillare herausgedrückt. Die Probe in der Agarose wird mit einem Lichtblatt beleuchtet und die Fluoreszenz mit einem Detektionsobjektiv, dass senkrecht zum Lichtblatt und damit auch senkrecht zur Lichtblattoptik steht, auf eine Kamera abgebildet, wie beispielsweise in Huisken et al. Development 136, 1963 (2009) "Selective plane illumination microscopy techniques in developmental biology" oder in WO 2004/053558 A1 dargestellt.

Diese Methode der Lichtblattmikroskopie hat drei große Nachteile. Zum einen sind die zu untersuchenden Proben relativ groß: Typische Proben stammen aus der Entwicklungsbiologie. Außerdem ist aufgrund der Probenpräparation und der Abmessungen der Probenkammer das Lichtblatt relativ dick und somit die erzielbare axiale Auflösung eingeschränkt. Zusätzlich ist die Probenpräparation aufwendig und nicht kompatibel zu Standard-Probenpräparation und Standard-Probenhalterung wie in der Fluoreszenzmikroskopie an Zellen üblich.

Aus der Publikation von Mohan et al. (Mohan, K.; Purnapatra, S. B. and Mondal, P. P. (2014): Three dimensional fluorescence imaging using multiple lightsheet microscopy; PLOS ONE 9: 1 - 8.) sind eine Anordnung und ein Verfahren zur multiplen Lichtblattmikroskopie bekannt. Dabei werden simultan mehrere zueinander parallele Lichtblätter in der Probe erzeugt und zur Bildgebung genutzt. Die Lichtblätter werden dabei in Richtung der Detektionsachse hintereinander liegend erzeugt.

Um diese Einschränkungen teilweise zu umgehen, wurde in den letzten Jahren ein neuartiger Lichtblattmikroskopie-Aufbau realisiert, bei dem das Beleuchtungsobjektiv und das Detektionsobjektiv senkrecht zueinander stehen und unter einem Winkel von $\alpha1$ gleich $\alpha2$ gleich 45° von oben auf die Probe gerichtet sind. Ein solcher SPIM-Aufbau ist beispielsweise in der WO 2012/110488 A2 bzw. in der WO 2012/122027 A2 offenbart.

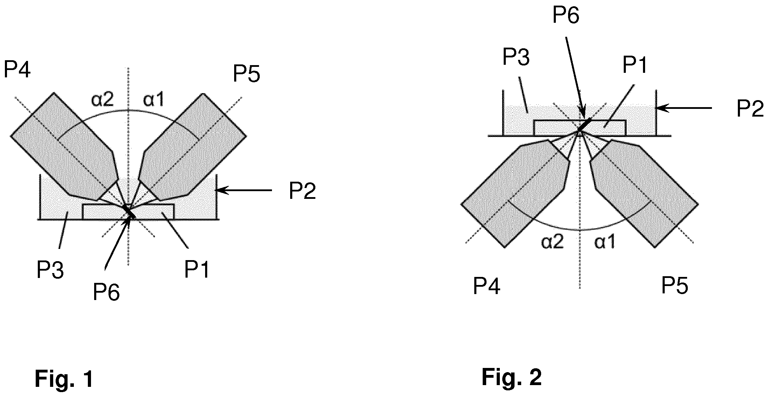

In der Fig. 1 ist eine solche aufrechte 45°-SPIM-Konfiguration schemenhaft dargestellt. Die Probe P1 befindet sich hierin auf dem Boden einer Petrischale P2. Die Petrischale ist mit einer Flüssigkeit P3, beispielsweise mit Wasser, gefüllt und die beidem SPIM-Objektive, also das Beleuchtungsobjektiv P4 und das Detektionsobjektiv P5, werden in die Flüssigkeit P3 eingetaucht. Eine derartige Anordnung bietet den Vorteil einer höheren Auflösung in axialer Richtung, da ein dünneres Lichtblatt P6 erzeugt werden kann. Aufgrund der höheren Auflösung können auch kleinere Proben untersucht werden. Die Probenpräparation ist dabei bedeuten einfacher geworden. Allerdings ist weiterhin sehr nachteilig, dass die Probenpräparation wie auch die Probenhalterung noch nicht dem in der Fluoreszenzmikroskopie an Zellen üblichen Standard-Probenpräparationen und Standard-Probenhalterungen entspricht. So muss die Petrischale relativ groß sein, damit die beiden SPIM-Objektive in die in der Petrischale befindliche Flüssigkeit eingetaucht werden können, ohne dass diese an den Rand der Schale anstoßen. Multiwellplatten, die Standard in vielen Bereichen der Biologie sind, können mit dieser Methode nicht verwendet werden, da die Objektive nicht in die sehr kleinen Wells der Platte eintauchen können. Außerdem hat diese Methode den Nachteil, dass z. B. ein Screening mit hohem Durchsatz nicht ohne weiteres möglich ist, da die Objektive beim Wechseln der Probe gereinigt werden müssen, um Kontamination der verschiedenen Proben zu vermeiden.

Diese Probleme werden durch die sogenannte Inverse 45°-SPIM-Konfiguration vermieden, wie sie in der Fig. 2 dargestellt ist. Dabei wird zwar die 45°-Konfiguration beibehalten, aber die beiden SPIM-Objektive, also das Beleuchtungsobjektiv P4 und das Detektionsobjektiv P5, sind nun nicht mehr von oben auf die Probe gerichtet, sondern die Probe wird von unten durch den transparenten Boden der Probenhalterung beleuchtet und die Fluoreszenz detektiert. Eine solche Anordnung wird in der DE 10 2013 107 297 A1 und DE 10 2013 107 298 A1 des Anmelders offenbart. Somit können alle typischen Probenhalterungen, wie z.B. Multiwell-Platten, Petrischalen und Objektträger genutzt werden, und eine Kontamination der Proben bei einem Screening mit hohem Durchsatz (High-Throughput-Screening) ist nicht mehr möglich.

Die beiden hier beschriebenen Varianten der Lichtblattmikroskopie haben gemeinsam, dass mit einem der beiden SPIM-Objektive ein Lichtblatt erzeugt wird, und mit dem zweiten der beiden SPIM-Objektive die Fluoreszenz detektiert wird. Hierbei liegt die Bildebene des Detektionsobjektivs im Lichtblatt, sodass eine scharfe Abbildung des beleuchteten Bereichs auf den Detektor erfolgt.

In der klassischen Weitfeldmikroskopie, aus der die Lichtblattmikroskopie abgeleitet wurde, werden Methoden beschrieben, mit denen mehrere Bildebenen gleichzeitig auf einen Detektor abgebildet werden können. Dalgarno et al. erläutern in "Multiplane imaging and three dimensional nanoscale particle tracking", OptExpr-18-877-2010, wie mit Hilfe eines speziellen Gitters mehrere Bildebenen gleichzeitig auf einen Detektor abgebildet werden können. Abrahamsson et al. beschreiben in "Fast multicolor 3D imaging using aberration-corrected multifocus microscopy", NatMeth-10-60-2013, wie dies mit Hilfe eines speziellen Gitters sowie mit zusätzlichen Korrekturelementen gelöst werden kann. Hierzu wird ein spezielles Phasengitter in den Detektionsstrahlengang eingefügt, womit das aus der gesamten Probe stammende Licht umsortiert wird. Licht aus verschiedenen Ebenen, die zur ursprünglichen Bildebene parallel sind, wird refokusiert und auf nebeneinander und untereinander liegenden Bereichen auf den Detektor gleichzeitig abgebildet. So wird der Detektor zum Beispiel in 3x3 Felder aufgeteilt und in jedes dieser Felder eine Ebene scharf abgebildet. Nachteilig ist in diesem Fall jedoch, dass relativ zur jeweils betrachteten Detektionsebene außerfokales Licht ebenfalls, allerdings unscharf, auf das Detektorfeld der entsprechenden Detektionsebenen abgebildet wird.

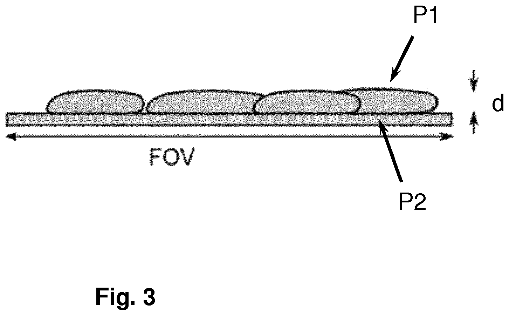

Eine wichtige Probenklasse, die mit einem Lichtblattmikroskop adressiert werden soll, sind Proben P1, die Schichten adhärenter Zellen aufweisen, auf einem Objektträger P2, wie in der Fig. 3 dargestellt. Die Zellen bilden eine zusammenhängende Schicht mit einer Dicke d von etwa 20 bis 30 μm. Wird durch diese Schicht hindurch entsprechend der aufrechten oder inversen 45°-Konfiguration mit einem Lichtblatt beleuchtet, so wird nur ein Bereich in der Probe mit einer Länge von etwa 30 bis 40 μm angeregt und entsprechend detektiert. Trotz eines Sehfeldes FOV von 200μm wäre auf dem Detektor folglich nur ein schmaler Streifen sichtbar.

Hat die Probe beispielsweise eine Dicke von 20 μm, und das Lichtblatt wird unter 45° in die Probe eingestrahlt, so hat der beleuchtete Bereich innerhalb der Probe eine Länge von 28 μm. Beträgt nun die numerische Apertur des Detektionsobjektivs NA=1.1, so beträgt entsprechend dem Nyquist-Kriterium die Sampling-Frequenz ungefähr 100nm/Pixel. Somit nimmt der beleuchtete Bereich 280 Pixel auf den Detektor ein. Handelt es sich zum Beispiel um eine sCMOS-Kamera mit 2560x2160px (pco.edge), so würden nahezu 9/10 des Sensors ungenutzt bleiben.

Aufgabe der vorliegenden Erfindung ist es deshalb, eine Anordnung zur Lichtblattmikroskopie und ein Verfahren zur Lichtblattmikroskopie zu beschreiben, mit der die Aufnahmegeschwindigkeit erheblich gesteigert werden kann, ohne die Abbildungsqualität zu beeinträchtigen oder die Strahlungsbelastung der Probe zu erhöhen.

Diese Aufgabe wird gelöst durch eine Anordnung zur Lichtblattmikroskopie nach Anspruch 1 und ein Verfahren zur Lichtblattmikroskopie nach Anspruch 16.

Eine Anordnung zur Lichtblattmikroskopie umfasst eine Probenebene zur Anordnung einer Probe. Diese Probenebene kann durch einen Probentisch zur Ablage oder aber zur Ablage und Fixierung der Probe ausgeführt sein. Die Probenebene kann jedoch auch durch eine Probenkammer oder eine Halterung bestimmt sein, in der eine Probe durch Fixierung beispielsweise in einer Öffnung dieser Probenkammer oder in der Halterung in einer festen Position gehalten und damit eine Probenebene definiert wird. Sie ist derart ausgestaltet, dass eine in der Probenebene befindliche Probe beleuchtet werden kann, ohne dass durch den Aufbau beispielsweise eines Probentisches, einer Probenkammer oder anderweitigen Probenhalterung in einem zentralen Teil der Probe Abschattungen erzeugt werden, und dass die durch die Probe ausgesendete Strahlung ebenfalls hindernisfrei detektiert werden kann. Die Probenebene ist also so angeordnet, dass kein Hindernis im optischen Weg der Anordnung zur Lichtblattmikroskopie entsteht. Das wird erreicht entweder durch die Wahl eines geeigneten, optisch transparenten Materials für den Probentisch, die Probenkammer oder die Probenhalterung, bzw. zumindest für die Teile davon, die sich im oder nahe am optischen Weg befinden oder durch entsprechende Öffnungen im Probentisch, Probenkammer oder Probenhalterung beispielsweise derart, dass die Probe, ein Objektträger oder ein Probengefäß direkt beleuchtet wird und dass von der Probe emittierte Strahlung direkt detektierbar ist. Die Probenebene kann des Weiteren beweglich ausgestaltet sein, so dass ihre Position im Raum in mindestens einer Richtung, vorzugsweise in zwei oder drei Richtungen des Raumes veränderbar ist, was beispielsweise durch eine Bewegung des Probentischs, der Probenkammer oder der Probenhalterung realisiert sein kann. Die Probe kann präpariert sein, um eine Fluoreszenzstrahlung aus der Probe bei Beleuchtung mit einem entsprechenden Licht zu unterstützen, und sie kann sich in einem transparenten Gefäß oder aber auf einem Objektträger, beispielsweise auf einer bzw. zwischen zwei transparenten Platten, wie beispielsweise zwei Glasplatten befinden.

Eine Anordnung zur Lichtblattmikroskopie umfasst weiterhin eine Beleuchtungsvorrichtung mit einer Lichtquelle und einer Beleuchtungsoptik. Die Beleuchtungsvorrichtung ist eingerichtet zur Erzeugung eines ersten Lichtblatts, das nichtparallel zur Probenebene, also beispielsweise nichtparallel zur Ebene eines Probentischs verläuft, zur Beleuchtung eines ersten Streifens der Probe und zur Anregung einer Fluoreszenzstrahlung in diesem ersten Streifen der Probe. Ein solches Lichtblatt kann z.B. gemäß den Prinzipien der statischen LichtblattMikroskopie (SPIM) erzeugt werden durch den Einsatz einer Zylinderlinse. Prinzipiell ist ein Lichtblatt auch erzeugbar durch Fokussieren eines Laserstrahls und schnelles Hin- und Herscannen dieses fokussierten Laserstrahls zwischen zwei Endpunkten einer Linie, die zur optischen Achse senkrecht verläuft (scanned laser light sheet fluorescence microscopy). Die dabei verwendete Licht- bzw. Laserquelle erzeugt monochromatisches Licht. Es ist dabei möglich, Licht mehrerer Wellenlängen einzusetzen, mit dem die Probe beispielsweise zeitsequentiell bezüglich der unterschiedlichen Wellenlängen beleuchtet wird. Der durch einen solchen SPIM-Aufbau entstehende Streifen in der Probe, der beleuchtet wird, ist sehr schmal. Typischerweise weist er Dicken von $0{,}1\,\mu m$ bis $10\,\mu m$, insbesondere Dicken von $0{,}4$ bis $1\,\mu m$ auf.

Schließlich umfasst die Anordnung zur Lichtblattmikroskopie eine Detektionsvorrichtung mit einem Sensor, also mit einem Detektor bzw. einem Detektionsmittel, der zu einer Detektion der von der Probe abgestrahlten Fluoreszenzstrahlung imstande ist. Bevorzugt ist hier ein Flächensensor bzw. ein anderweitig ortsauflösendes Detektionsmittel, zur örtlich aufgelösten Detektion der Fluoreszenzstrahlung.

Des Weiteren enthält die Detektionsvorrichtung eine Abbildungsoptik zur Abbildung der von der Probe abgestrahlten Fluoreszenzstrahlung in eine Detektionsebene des Sensors. Die Detektionsebene ist dabei die Ebene, in der die Signale der Abbildung in der Form zur Verfügung gestellt werden, in der sie vom Sensor detektiert werden sollen.

Die Abbildungsoptik enthält in einer bevorzugten Ausführungsform ein Objektiv und eine Tubuslinse. Die Tubuslinse kann im Detektionsstrahlengang an verschiedenen Positionen angeordnet sein, zwischen Objektiv und Tubuslinse können sich also weitere optische Elemente befinden.

Die Detektionsvorrichtung weist eine Detektionsachse auf. Diese Detektionsachse bildet mit dem Lichtblatt einen Winkel aus einem Winkelbereich von 70° bis 110°, bevorzugt aus einem Winkelbereich von 80° bis 100°. Besonders bevorzugt ist eine Anordnung, in der die Detektionsvorrichtung eine zum Lichtblatt senkrechte Detektionsachse aufweist.

Erfindungsgemäß ist die Anordnung zur Lichtblattmikroskopie dadurch gekennzeichnet, dass die Beleuchtungsvorrichtung eingerichtet ist zur Erzeugung mindestens eines zum ersten Lichtblatt parallel angeordneten, weiteren Lichtblatts, zur Beleuchtung eines weiteren Streifens der Probe und zur Anregung einer Fluoreszenzstrahlung in diesem weiteren Streifen der Probe. Dieses weitere Lichtblatt ist in Detektionsrichtung, also entlang der Detektionsachse, wie auch in Beleuchtungsrichtung, zum ersten Lichtblatt verschoben.

Beleuchtungsrichtung, Detektionsrichtung und Probenebene bilden in der erfindungsgemäßen Anordnung ein Dreieck, wobei der Winkel zwischen der Beleuchtungsrichtung und der Probenebene sowie der Abstand der parallelen Lichtblätter in Abhängigkeit von der Probendicke vorteilhaft so gewählt wird, dass die durch das erste und das weitere Lichtblatt beleuchteten Streifen der Probe in Detektionsrichtung gesehen nicht übereinander liegen.

Die Erzeugung zweier oder mehrerer paralleler Lichtblätter kann folgendermaßen erfolgen: Ein Lasermodul erzeugt einen Laserstrahl. Der Laserstrahl kann gaußförmig sein oder beispielsweise auf Besselstrahlen, Mathieu-Strahlen oder $Sinc^3$-Strahlen, also auf einer nichtbeugungsbegrenzten Strahlform, basieren. Im Ortfrequenzraumist ein räumlicher Lichtmodulator (SLM) angeordnet, der von dem Laserstrahl ausgeleuchtet wird. Auf dem SLM wird ein Phasenmuster derart kodiert, dass das Phasenmuster das Spektrum mehrerer paralleler fokusverschobener Lichtblätter erzeugt. Mit einer weiteren Linse wird das Spektrum der SLM-Ebene in den Ortsraum transferiert. Hier erfolgt eine Filterung, zum Beispiel mit einer Blende. Die Blendenebene wird mit ihr folgenden Linsenanordnungen sowie mittels eines Scanners, mit dem ein Scannen in zwei Richtungen möglich ist, auf die Probe gelenkt. Dies kann unter Zuhilfenahme eines Umlenkspiegels erfolgen, dem eine Tubuslinse und ein Beleuchtungsobjektiv nachgelagert sind, die die auf dem Umlenkspiegel vorliegende Lichtverteilung in die Probe abbilden.

Durch die Beleuchtung einer Probe durch mehrere parallel zueinander angeordnete Lichtblätter kann die Aufnahmegeschwindigkeit gesteigert werden und der Sensor optimal ausgenutzt werden, da beispielsweise die Anordnung der Lichtblätter so erfolgen kann, dass verschiedene Lichtblätter nebeneinander verschiedene Sensorpositionen nutzen können. So kann die Beleuchtung durch die mehreren Lichtblätter für die größtmögliche Steigerung der Aufnahmegeschwindigkeit gleichzeitig erfolgen. Gleichzeitig ist dabei auch so zu verstehen, dass die Beleuchtung der Probe durch die mehreren Lichtblätter innerhalb einer Sensordetektionszeit T, also beispielsweise einer Kamerabelichtungszeit, erfolgt. Eine solche Sensordetektionszeit liegt üblicherweise im Bereich von 1ms bis 100ms. Diese Beleuchtung kann also auch schnell sequentiell erfolgen, solange alle n (n>=2) Lichtblattbelichtungen innerhalb von T erfolgen. Dabei kann die Beleuchtungszeit für jedes der Lichtblätter mit T/n gewählt werden, es können aber auch davon abweichende Verteilungen für die einzelnen Lichtblätter gewählt werden, um beispielsweise Helligkeitsunterschiede auszugleichen, wenn die mehreren Lichtblätter unterschiedliche Farben aufweisen. Die Detektionsvorrichtung ist in einer solchen Anordnung zur Lichtblattmikroskopie eingerichtet, in zwei oder mehr Ebenen, die durch ein Lichtblatt beleuchtet werden, zu detektieren, d.h., die von den Lichtblättern beleuchteten Streifen der Probe scharf abzubilden. Werden diese Lichtblätter zeitsequentiell eingesetzt und ist die Detektionsvorrichtung darauf abgestimmt, so ist prinzipiell auch eine Detektionsvorrichtung für eine Anordnung zur Lichtblattmikroskopie nach dem Stand der Technik mit kleineren Änderungen gegenüber dem Stand der Technik, wie beispielsweise eines leicht und schnell veränderbaren Objektiv-Brennpunktes einsetzbar. Allerdings nutzt dies die Möglichkeiten der Steigerung der Aufnahmegeschwindigkeit nicht optimal aus.

Deshalb ist die erfindungsgemäße Anordnung zur Lichtblattmikroskopie weiterhin gekennzeichnet durch eine Detektionsvorrichtung, die eingerichtet ist, die im ersten Streifen der Probe durch das erste Lichtblatt und die im weiteren Streifen der Probe durch das weitere Lichtblatt angeregte Fluoreszenzstrahlung gleichzeitig zu detektieren. Die bedeutet, dass die Fluoreszenzstrahlung aus dem ersten Streifen der Probe, die mit dem ersten Lichtblatt abgeregt wurde, und die Fluoreszenzstrahlung aus dem zweiten Streifen der Probe, die mit dem zweiten Lichtblatt angeregt wurde, gleichzeitig scharf abgebildet und detektiert werden.

Weiterhin vorteilhaft ist eine erfindungsgemäße Anordnung zur Lichtblattmikroskopie mit einer Detektionsvorrichtung, die eine dem ersten Lichtblatt zugeordnete erste Detektionsebene und eine dem weiterem Lichtblatt zugeordnete weitere Detektionsebene enthält. Diese Detektionsvorrichtung ist eingerichtet zur gleichzeitigen kongruenten Deckung einer ersten Fokusebene des ersten Lichtblatts mit der ersten Detektionsebene und einer weiteren Fokusebene des weiteren Lichtblatts mit einer weiteren Detektionsebene. Die Fokusebene ist die Ebene der scharfen Abbildung des vom jeweiligen Lichtblatt beleuchteten Streifens der Probe durch die Abbildungsoptik. Sie wird auch Schärfeebene genannt. Kongruente Deckung bedeutet dabei, dass jeweils die Fokusebene mit der zugehörigen Detektionsebene in Übereinstimmung bzw. in Deckung gebracht wird. Eine solche Anordnung erlaubt nun die simultane Beleuchtung einer Probe durch mehrere parallel zueinander angeordnete Lichtblätter bei gleichzeitiger scharfer Abbildung aller von den Lichtblättern beleuchteter Streifen.

Dabei werden diese Signale entweder direkt in der Detektionsebene detektiert, oder von der Detektionsebene derart an den Sensor weitergeleitet oder in eine Sensorebene abgebildet, dass sie in identischer Form vom Sensor detektiert werden können. Die Detektionsebene kann sich deshalb auch außerhalb des eigentlichen Sensors befinden, wenn zwischen Detektionsebene und Sensor Mittel zur Verfügung stehen, durch die in der Detektionsebene empfangenen Signale zum Sensor weitergeführt werden.

Wenn zur kongruenten Deckung der jeweiligen Fokusebene eines Lichtblatts mit seiner Detektionsebene zusätzliche Mittel notwendig sind, so müssen diese nicht für alle Lichtblätter vorhanden sein, um die hier genannte Bedingung zu erfüllen. Insbesondere das erste Lichtblatt kann in entsprechenden Ausgestaltungen auch ohne zusätzliche Mittel auskommen.

Mit der erfindungsgemäßen Anordnung können somit ein weiteres, zum ersten Lichtblatt paralleles Lichtblatt, oder auch mehrere weitere, zum ersten Lichtblatt parallele Lichtblätter erzeugt werden, und die üblicherweise dabei entstehenden unterschiedlichen Fokusebenen, die ein gleichzeitiges scharfes Detektieren aller durch verschiedene Lichtblätter angeregte Streifen der Probe unmöglich machen würden, überwunden werden. Somit erhöht sich die Geschwindigkeit wesentlich, mit der eine Probe untersucht werden kann, der Sensor der Detektionsvorrichtung wird optimal ausgenutzt und dennoch wird eine scharfe Abbildung aller durch die Lichtblätter angeregten Streifen der Probe erreicht.

Die bevorzugte erfindungsgemäße Lösung zeichnet sich also dadurch aus, dass mehrere Lichtblätter simultan schmale Streifen der Probe beleuchten. Die Lichtblätter liegen hierbei parallel zueinander und sind senkrecht zur Detektionsachse angeordnet. Sie sind aber in Detektionsrichtung zueinander verschoben, was zu unterschiedlich langen optischen Wegen der von der Probe abgestrahlten Fluoreszenzstrahlung vom jeweiligen Lichtblatt bis zur Abbildungsoptik der Detektionsvorrichtung führt. Dies führt zu unterschiedlichen Fokusebenen der mit verschiedenen Lichtblättern beleuchteten Streifen der Probe, was deshalb im Aufbau und in der Funktion der Detektionsvorrichtung derart berücksichtigt wird, dass mit verschiedenen Lichtblättern beleuchtete Streifen der Probe in verschiedenen Ebenen detektiert bzw. zur Detektion bereite Signale in verschiedenen Ebenen aufgenommen werden bzw. die Fokusebenen der jeweiligen Lichtblätter durch weitere optische Elemente in eine für alle Lichtblätter einheitliche Detektionsebene bewegt werden: So können beispielsweise in der Detektionsvorrichtung Mittel angeordnet sein, die die Phase einer sie passierenden Lichtwelle verändern, unterschiedliche Fokusebenen können mit räumlichen Lageverschiebungen von Teilen des Sensors ausgeglichen werden, oder es wird durch Nutzung unterschiedlicher Wellenlängen für das jeweilige Lichtblatt unterschiedlichen Fokusebenen entgegengewirkt.

In einer vorteilhaften Ausführung ist die erfindungsgemäße Anordnung zur Lichtblattmikroskopie derart ausgestaltet, dass die durch das erste Lichtblatt und die durch das parallel angeordnete weitere Lichtblatt angeregte Fluoreszenzstrahlung in Detektionsrichtung einander nicht überlagert ist, und dem ersten und dem weiteren Lichtblatt jeweils eine getrennte Sensorposition des Sensors, also ein exklusiver Detektionsbereich des Sensors zugeordnet ist. Die Projektionen der Lichtblätter in Detektionsrichtung überlappen in dieser Anordnung also nicht. In einer solchen Anordnung zur Lichtblattmikroskopie mit mehreren zueinander parallelen Lichtblättern ist die Detektion der in den verschiedenen Lichtblättern angeregten Fluoreszenzstrahlung weniger komplex.

In einer weiteren Ausführung ist die erfindungsgemäße Anordnung zur Lichtblattmikroskopie derart ausgestaltet, dass die Detektionsvorrichtung Mittel für eine spektrale Detektion enthält, oder die Detektionsvorrichtung Mittel für eine konfokale Filterung, also eine "Out of Focus"-Unterdrückung, enthält oder aber die Beleuchtungsvorrichtung Mittel für eine strukturierte Beleuchtung enthält. Dies unterstützt die Trennung der von verschiedenen Lichtblättern auf dem Sensor eintreffenden Fluoreszenzstrahlung. Die Projektionen der Lichtblätter in Detektionsrichtung dürfen in diesen Fällen ganz oder teilweise überlappen.

Ist der Sensor also fähig, Licht unterschiedlicher Wellenlängen zu detektieren und in Abhängigkeit von der Wellenlänge zu trennen, so kann das erste Lichtblatt und das weitere Lichtblatt, wie gegebenenfalls auch mehrere weitere Lichtblätter, unterschiedliche Wellenlängen aufweisen oder aber die Probe kann zwei oder mehr Farbstoffe enthalten, die mit den Lichtblättern angeregt werden.

Weisen die zueinander parallelen Lichtblätter gleiche Wellenlängen auf, obwohl sie sich in ihren Projektionen in Detektionsrichtung überlappen, so sind für jedes der Lichtblätter bzw. für die Fluoreszenzstrahlung, die in jedem von einem der parallelen Lichtblätter beleuchteten Streifen emittiert wird, Mittel zur Hintergrundunterdrückung erforderlich. Beispielsweise treten bei dickeren Proben bei der vorgeschlagenen Beleuchtung durch mehrere simultan eingestrahlte parallele Lichtblätter zunehmend außerfokale Anteile auf, die von den anderen Lichtblättern stammen, die auf dem jeweiligen Sensorbereich nicht scharf abgebildet werden.

Es ist möglich, außerfokales und damit unfokussiertes Licht aus den jeweils anderen Probenbereichen durch konfokale Detektion zu unterdrücken. Hierfür kann beispielsweise die Methode der "Rolling Shutter" genutzt werden. "Rolling Shutter" bezeichnet den Auslesevorgang eines "active pixel" Bildsensors, in CMOS- bzw. sCMOS-Technologie, also in Complementary Metal-Oxide-Semiconductor Technologie bzw. in scientific CMOS-Technologie. Im Gegensatz zum CCD-Sensor werden die Pixel dieser Sensoren zeilen-oder spaltenweise aktiviert und ausgelesen, so dass der jeweils lichtempfindliche Teil des Flächensensors nur durch einen schmalen Sensorstreifen gebildet wird, der innerhalb einer Bildbelichtung schnell über den Sensorbereich läuft. Synchronisiert man die Scanbewegung einer Linienbeleuchtung durch parallel zueinander verlaufende Lichtblätter auf diese Auslesebewegung, so erhält man damit eine "virtuelle" konfokale Schlitzblende; außerfokales und damit unfokussiertes Licht aus anderen Probenbereichen wird unterdrückt, da es auf die jeweils gerade nicht aktiven Sensorbereiche vor und hinter der aktiven Pixellinie des "Rolling Shutters" fällt.

Für dünne Proben ist dabei ein "Rolling Shutter" für mehrere Lichtblätter einsetzbar. Bei dickeren Proben bzw. längeren Lichtblättern hingegen ist es vorteilhaft, mehrere "Rolling Shutter" durch geeignete Ansteuerung räumlich zueinander zu versetzen und ggf. zueinander versetzt über einen CMOS Sensor laufen zu lassen, wenn die Probe durch die Lichtblätter gescannt wird.

Eine weitere Möglichkeit der Nutzung zueinander paralleler Lichtblätter gleicher Wellenlängen, die sich in ihren Projektionen in Detektionsrichtung überlappen, besteht in einer strukturierten Beleuchtung. Dies ist möglich mit einer inkohärenten oder aber mit einer kohärenten Strukturierung.

Im Falle der inkohärenten Strukturierung wird von einem gescannten Lichtblatt ausgegangen, also einem Lichtblatt, das durch den Rastervorgang eines Strahls, der schnell gegenüber der Sensordetektionszeit, beispielsweise einer Kamerabelichtungszeit, ist, aufgespannt wird. Wird nun die Belichtung durch den Laser zu genau definierten Zeitpunkten während dieses Rastervorgangs unterbrochen, kann ein Gitter "in die Probe geschrieben" werden.

Im Falle der kohärenten Strukturierung hingegen wird das Gitter bzw. die Strukturierung durch Interferenz erzeugt.

Eine vorteilhafte Ausgestaltung der erfindungsgemäßen Anordnung zur Lichtblattmikroskopie weist eine Detektionsvorrichtung auf, die zur kongruenten Deckung der ersten Fokusebene mit der ersten Detektionsebene und der weiteren Fokusebene mit der weiteren Detektionsebene ein Phasenelement enthält. Der Einsatz eines Phasenelements stellt eine relativ einfache Lösung dar, um die Fokusebene mittels einer darin eingeschriebenen optischen Funktion in die Detektionsebene hinein zu bewegen. Das Phasenelement wird dabei zwischen dem Detektionsobjektiv und dem Sensor in den Detektionsstrahlengang gebracht. Je nach Wahl des Phasenelements ist eine Nachfokussierung der Abbildungen der einzelnen Lichtblätter möglich, um eine noch schärfere Abbildung zu ermöglichen. Dies ist dann der Fall, wenn das Phasenelement entsprechend regelbar ist.

Alle Anordnungen zur Lichtblattmikroskopie, die Phasenelemente im Detektionsstrahlengang umfassen, um eine erste Fokusebene mit der ersten Detektionsebene und eine weitere Fokusebene mit der weiteren Detektionsebene zu überlagern, also in kongruente Deckung zu bringen, erlauben die Beleuchtung der Probe mit mehr als zwei zueinander parallelen Lichtblättern. Sie können so eingesetzt werden, dass eine simultane Beleuchtung durch mehrere Lichtblätter, eine gleichzeitige kongruente Deckung der jeweiligen Fokusebenen mit den jeweiligen Detektionsebenen der Lichtblätter und damit eine simultane Detektion aller durch die Lichtblätter beleuchteten Streifen möglich ist. Sie können allerdings auch für eine zeitsequentielle Detektion mehrerer Lichtblätter verwendet werden, wenn durch ein regelbares Phasenelement die Detektionsebenen der verschiedenen Lichtblätter mit einer sehr hohen Geschwindigkeit nacheinander durchlaufen werden, die nicht erreichbar ist, wenn Elemente der Detektionsvorrichtung mechanisch bewegt werden müssten.

Eine erste Möglichkeit für eine Anordnung eines Phasenelements in der Detektionsvorrichtung der erfindungsgemäßen Anordnung zur Lichtblattmikroskopie, deren Abbildungsoptik ein Objektiv enthält, ist die Anordnung eines Phasengitters in einem Detektionsstrahlengang zwischen dem Objektiv und dem Sensor.

Auf dem Sensor wird dann in einem dem ersten Lichtblatt zugeordneten Bereich nur der vom ersten Lichtblatt beleuchtete Streifen an einer ersten Position scharf abgebildet. Der von einem weiteren Lichtblatt beleuchtete Streifen wird hingegen an einer zweiten Position des dem ersten Lichtblatt zugeordneten Bereichs unscharf abgebildet. Es werden jedoch nur die Positionen in dem dem jeweiligen Lichtblatt zugeordneten Bereich des Sensors berücksichtigt, die scharf abgebildet werden, um eine entsprechende Abbildung der Probe zu rekonstruieren.

Zusätzlich zum Phasengitter können zudem weitere Korrekturelemente in den Detektionsstrahlengang eingeführt sein.

Auch sind solche Anordnungen sowohl in der 45°-SPIM-Konfiguration, der inversen 45°-SPIM-Konfiguration wie auch in einer klassischen SPIM-Konfiguration möglich.

Eine weitere Möglichkeit für eine Anordnung eines Phasenelements in der Detektionsvorrichtung der erfindungsgemäßen Anordnung zur Lichtblattmikroskopie ist die Anordnung eines räumlichen Lichtmodulators (SLM) mit einer Phasenfunktion in einem Ortsfrequenzraum, wie beispielsweise in der Pupille eines Objektivs der Abbildungsoptik. Für jedes Lichtblatt wird in diesem Fall eine kombinierte Transferfunktion aus der Multiplikation einzelner Transferfunktionen optischer Grundelemente ermittelt. Dabei ergibt sich eine Gesamtphasenfunktion, die in den räumlichen Lichtmodulator zu kodieren ist, aus der Addition der kombinierten Transferfunktionen aller zur Beleuchtung der Probe genutzten Lichtblätter.

Zur chromatischen Korrektur kann zusätzlich ein Korrekturelement in den Strahlengang angeordnet sein.

Alternativ kann ein solcher räumlicher Lichtmodulator (SLM) mit einer Phasenfunktion, in einem Ortsraum, also beispielsweise in einer Zwischenbildebene, angeordnet werden. In diesem Fall kann die Phasenfunktion ein Mikrolinsenarray nachbilden.

Diese Anordnung hat den Vorteil, dass alle in den von den Lichtblättern angeregten Streifen der Probe emittierten Photonen für die Detektion genutzt werden können.

In einer alternativen Ausgestaltung weist die erfindungsgemäße Anordnung zur Lichtblattmikroskopie eine Detektionsvorrichtung auf, die die kongruente Deckung der ersten Fokusebene mit der ersten Detektionsebene und der weiteren Fokusebene mit der weiteren Detektionsebene auf geometrischen Wege dadurch erreicht, dass die Detektionsvorrichtung einen Sensor enthält, der so eingerichtet ist, dass dem ersten Lichtblatt ein erster Sensorbereich und dem weiteren Lichtblatt ein weiterer Sensorbereich zugeordnet ist, wobei der weitere Sensorbereich gegenüber dem ersten Sensorbereich entlang der Detektionsachse verschoben angeordnet ist. Die einzelnen Sensorbereiche sind also stufenförmig zueinander angeordnet und bilden zusammen einen Stufensensor, wobei die Höhe und Breite der Stufen so gewählt sind, dass jeweils der von einem ersten Lichtblatt beleuchtete erste Streifen der Probe scharf auf den ersten Sensorbereich abgebildet wird, und der von einem weiteren Lichtblatt beleuchtete weitere Streifen der Probe scharf auf einen weiteren Sensorbereich abgebildet wird. Dabei kann ein solcher Sensorbereich autonom betreibbar sein, oder aber Teil eines Stufensensors sein, der einheitlich angesteuert wird.

Alle Anordnungen zur Lichtblattmikroskopie, die einen Stufensensor bzw. zueinander stufenförmig angeordnete Sensorbereiche im Detektionsstrahlengang umfassen, um eine erste Fokusebene mit der ersten Detektionsebene und eine weitere Fokusebene mit der weiteren Detektionsebene in kongruente Deckung zu bringen, erlauben die Beleuchtung der Probe mit mehr als zwei zueinander parallelen Lichtblättern. Sie können so eingesetzt werden, dass eine simultane Beleuchtung durch mehrere Lichtblätter, eine gleichzeitige kongruente Deckung der jeweiligen Fokusebenen mit den jeweiligen Detektionsebenen der Lichtblätter und damit eine simultane Detektion aller durch die Lichtblätter beleuchteten Streifen möglich ist. Sie können allerdings auch für eine zeitsequentielle Detektion verwendet werden.

In einer weiteren alternativen Ausgestaltung weist die erfindungsgemäße Anordnung zur Lichtblattmikroskopie eine Detektionsvorrichtung auf, die die kongruente Deckung der ersten Fokusebene mit der ersten Detektionsebene und der weiteren Fokusebene mit der weiteren Detektionsebene dadurch erreicht, dass die Detektionsvorrichtung eine Faserplatte umfasst, die Glasfasern enthält, deren erste Enden zum Einkoppeln der abgebildeten Fluorenzenzstrahlung angeordnet sind, und deren entgegengesetzte Enden entweder in direkten Kontakt mit dem Sensor stehen oder durch optische Mittel auf den Sensor abbildbar sind.

Dabei enthält die Faserplatte einen dem ersten Lichtblatt zugeordneten ersten Faserplattenabschnitt und einen dem weiteren Lichtblatt zugeordneten weiteren Faserplattenabschnitt, dessen Enden zum Einkoppeln entlang der Detektionsachse verschoben angeordnet sind. Auch diese Faserplatte ist also stufenförmig derart ausgestaltet, dass auf einem ersten Abschnitt der Faserplatte, der von dem ersten Lichtblatt beleuchtete Streifen der Probe scharf abgebildet und auf einem weiteren, vom ersten Abschnitt durch eine Stufe getrennten Abschnitt der Faserplatte der von dem weiteren Lichtblatt beleuchtete Streifen der Probe scharf abgebildet wird.

Hierbei wird also der jeweilige durch ein Lichtblatt angeregte Streifen scharf auf die dazugehörende Stufe des Faserplatte abgebildet. Das Licht koppelt in die Glasfasern der Platte ein und wird auf die gegenüberliegende flache Seite der Faserplatte geleitet. Dort wird es direkt vom Sensor detektiert oder durch eine weitere Abbildungsoptik auf den Detektor abgebildet.

Alle Anordnungen zur Lichtblattmikroskopie, die eine stufenförmig ausgestaltete Faserplatte im Detektionsstrahlengang umfassen, um eine erste Fokusebene mit der ersten Detektionsebene und eine weitere Fokusebene mit der weiteren Detektionsebene in kongruente Deckung zu bringen, erlauben die Beleuchtung der Probe mit mehr als zwei zueinander parallelen Lichtblättern. Sie können so eingesetzt werden, dass eine simultane Beleuchtung durch mehrere Lichtblätter, eine gleichzeitige kongruente Deckung der jeweiligen Fokusebenen mit den jeweiligen Detektionsebenen der Lichtblätter und damit eine simultane Detektion aller durch die Lichtblätter beleuchteten Streifen möglich ist. Sie können allerdings auch für eine zeitsequentielle Detektion verwendet werden.

In einer weiteren alternativen Anordnung zur Lichtblattmikroskopie umfasst die Detektionsvorrichtung zur kongruenten Deckung der ersten Fokusebene mit der ersten Detektionsebene und der weiteren Fokusebene mit der weiteren Detektionsebene ein Mikrolinsenarray zwischen einem Objektiv der Abbildungsoptik und dem Sensor. Das Mikrolinsenarray ist derart ausgestaltet, dass dem ersten Lichtblatt eine erste Mikrolinse einer ersten Art mit einer ersten Brechkraft und dem weiteren Lichtblatt eine weitere Mikrolinse des Mikrolinsenarrays einer weiteren Art mit einer weiteren Brechkraft zugeordnet ist. Die erste Brechkraft der ersten Mikrolinse ist dabei abhängig von der Lage der ersten Fokusebene und die weitere Brechkraft der weiteren Mikrolinse ist abhängig von der Lage der weiteren Fokusebene. Das Mikrolinsenarray ist so im Detektionsstrahlengang angeordnet, dass es die jeweilige Fokusebene in eine gemeinsame Sensorebene abbildet.

Auch die Anordnungen zur Lichtblattmikroskopie, die ein Mikrolinsenarray im Detektionsstrahlengang zwischen einem Objektiv der Abbildungsoptik und dem Sensor enthalten, um eine erste Fokusebene mit der ersten Detektionsebene und eine weitere Fokusebene mit der weiteren Detektionsebene in kongruente Deckung zu bringen, erlauben die Beleuchtung der Probe mit mehr als zwei zueinander parallelen Lichtblättern. Sie können so eingesetzt werden, dass eine simultane Beleuchtung durch mehrere Lichtblätter, eine gleichzeitige kongruente Deckung der jeweiligen Fokusebenen mit den jeweiligen Detektionsebenen der Lichtblätter und damit eine simultane Detektion aller durch die Lichtblätter beleuchteten Streifen möglich ist. Sie können allerdings auch für eine zeitsequentielle Detektion verwendet werden.

In wiederum einer weiteren Anordnung zur Lichtblattmikroskopie umfasst die Detektionsvorrichtung zur kongruenten Deckung der ersten Fokusebene mit der ersten Detektionsebene und der weiteren Fokusebene mit der weiteren Detektionsebene einen Strahlteiler in einem Detektionsstrahlengang, der bevorzugt hinter einem Objektiv einer Abbildungsoptik angeordnet ist. Dabei ist der Strahlteiler derart im Detektionsstrahlengang angeordnet, dass er den Strahlengang teilt und eine erste zu dem ersten Lichtblatt zugeordnete und eine weitere zu einem weiteren Lichtblatt zugeordnete weitere Fokusebene nebeneinander auf dem Sensor abgebildet werden. Des Weiteren kann die Anordnung eine erste zu dem ersten Lichtblatt zugeordnete erste Tubuslinse und eine weitere zu einem weiteren Lichtblatt zugeordnete weitere Tubuslinse oder aber anstelle der Tubuslinsen andere den jeweiligen Lichtblatt zugeordnete optische Elemente umfassen. Durch den Strahlteiler werden die Signale, die aus dem Streifen der Probe emittiert werden, der durch ein weiteres Lichtblatt beleuchtet wird, beispielsweise auf die weitere Tubuslinse abgelenkt, in der Regel unter Einsatz eines weiteren Spiegels oder einer anderen Anordnung, die eine erneute Richtungsänderung der durch den Strahlteiler abgelenkten Strahlung ermöglicht, so dass der Strahlengang des ersten Lichtblats und des weiteren Lichtblatts letztlich auf einem Sensor nebeneinander detektiert werden können. Hierfür müssen das erste und das zweite Lichtblatt entweder jeweils mit unterschiedlichen Wellenlängen erzeugt werden bzw. die Probe muss unterschiedliche Farbstoffe enthalten, die eine Fluoreszenzstrahlung emittieren können, damit aus den jeweiligen beleuchteten Streifen unterschiedlicher Lichtblätter eine Fluoreszenzstrahlung von jeweils unterschiedlicher Wellenlänge emittiert wird.

Auch in einer solchen Anordnung ist es zwar grundsätzlich möglich, die Probe mit mehr als zwei zueinander parallelen Lichtblättern zu beleuchten. Dies würde jedoch einen erheblich komplizierteren Aufbau mit weiteren Strahlteilern und zusätzlichen Anordnungen zur Richtungsänderung der abgelenkten Strahlung bedeuten. Eine solche Anordnung kann so eingesetzt werden, dass eine simultane Beleuchtung durch mehrere Lichtblätter, eine gleichzeitige kongruente Deckung der jeweiligen Fokusebenen mit den jeweiligen Detektionsebenen der Lichtblätter und damit eine simultane Detektion aller durch die Lichtblätter beleuchteten Streifen möglich ist. Sie kann allerdings auch für eine zeitsequentielle Detektion verwendet werden.

Eine bevorzugte Anordnung zur Lichtblattmikroskopie ist zur Durchführung eines Volumenscans der Probe eingerichtet. Mit einer solchen Anordnung kann das gesamte Volumen einer Probe aufgenommen werden. Zu diesen Zwecken enthält die Anordnung Mittel zur Durchführung einer Relativbewegung zwischen den Lichtblättern und der Probe. Diese erlauben es, für jedes Lichtblatt einen z-Stack aufzunehmen. Solche Mittel sind beispielsweise eine bewegliche Probenebene oder ein in einer festen Probenebene beweglicher Objektträger, der in x-, y- oder z-Richtung oder in einer Kombination dieser drei Richtungen verschiebbar ist. Eine Relativbewegung kann jedoch auch mit mindestens einem Scanner und gegebenenfalls weiteren Mittel zur Strahlablenkung realisiert werden, mit denen die Lichtblätter in einer fixen Probe verschoben werden.

Die einzelnen z-Stacks werden während bzw. nach der Aufnahme zu einem dreidimensionalen Volumen verrechnet, in dem ein Gesamtbild der Probe abgebildet ist. Zu diesen Zwecken enthält die Anordnung zur Lichtblattmikroskopie eine Steuer- und Recheneinheit.

Eine erste, besonders bevorzugte Anordnung zur Lichtblattmikroskopie, die zur Durchführung eines Volumenscans der Probe eingerichtet ist, enthält dabei Mittel zur Durchführung einer Relativbewegung zwischen den Lichtblättern und der Probe entlang einer Achse parallel zu einem Objektträger. Eine solche Anordnung erlaubt eine kurze Lichtblattlänge. Zudem ist der Energieeintrag in das Probenvolumen sehr gering und somit werden ein Bleichen der Probe wie auch andere phototoxische Einflüsse so niedrig wie möglich gehalten.

Eine weitere Anordnung zur Lichtblattmikroskopie, die zur Durchführung eines Volumenscans der Probe eingerichtet ist, enthält Mittel zur Durchführung einer Relativbewegung zwischen den Lichtblättern und der Probe entlang einer Achse parallel zur Detektionsrichtung. Auch in einer solchen Anordnung kann eine kurze Lichtblattlänge verwendet werden.

Eine dritte Anordnung zur Lichtblattmikroskopie, die zur Durchführung eines Volumenscans der Probe eingerichtet ist, enthält Mittel zur Durchführung einer Relativbewegung zwischen den Lichtblättern und der Probe entlang einer Achse senkrecht zu einem Objektträger.

Dabei ist es möglich, dass mit einer besonderen Anordnung zur Lichtblattmikroskopie, die zur Durchführung eines Volumenscans der Probe eingerichtet ist, Relativbewegungen auch entlang mehrerer Achsen durchgeführt werden können.

Das erste und das weitere Lichtblatt einer Anordnung zur Lichtblattmikroskopie kann beispielsweise auf Gauss-Strahlen oder Besselstrahlen oder Mathieu-Strahlen oder Sinc$^3$-Strahlen basieren.

In einer speziellen Anordnung zur Lichtblattmikroskopie ist des Weiteren eine Länge des ersten und/oder des weiteren Lichtblatts an eine Dicke der Probe angepasst.

In einem erfindungsgemäßen Verfahren zur Lichtblattmikroskopie wird eine Probe mit mindestens zwei zueinander parallel und zu einer Detektionsachse senkrecht angeordneten Lichtblättern beleuchtet. Diese Lichtblätter erzeugen in den den jeweiligen Lichtblättern zugeordneten Streifen der Probe eine Fluoreszenzstrahlung, die mit einer Abbildungsoptik in eine Fokusebene abgebildet und mit einem Sensor detektiert wird. Dabei wird zur Detektion der Fluoreszenzstrahlung des jeweiligen Streifens der Probe die Fokusebene eines Lichtblatts mit einer Detektionsebene des jeweiligen Lichtblatts in Übereinstimmung gebracht, wobei die in den jeweiligen Streifen der Probe angeregten Fluoreszenzstrahlungen gleichzeitig detektiert werden.

Dies kann erfolgen durch Verschiebung der jeweiligen Detektionsebene in die Fokusebene des jeweiligen Lichtblatts, in reeller Art und Weise beispielsweise durch den Einsatz von zueinander entlang der Detektionsachse verschobenen Sensorbereichen, wobei je ein Sensorbereich für die Detektion eines Lichtblatts genutzt wird oder in idealer Art und Weise beispielsweise durch den Einsatz einer Glasfasern zur Weiterleitung des empfangenen Signals enthaltenden, stufenförmig aufgebauten Faserplatte, die die Signale in der Fokusebene in Empfang nimmt und an den Sensor weiterleitet, wo die in der Detektionsebene empfangenen Signale dann tatsächlich detektiert werden.

Dies kann alternativ erfolgen durch eine Verschiebung oder Abbildung der Fokusebene des jeweiligen Lichtblatts in eine feste Detektionsebene hinein, beispielsweise unter Nutzung eines zusätzlichen Mikrolinsenarrays, in dem jeweils eine Mikrolinse einem Lichtblatt zugeordnet ist und ihre Brechkraft entsprechend angepasst ist, dass eine scharfe Abbildung des vom jeweiligen Lichtblatt beleuchteten Streifens der Probe auf den Sensor erfolgt.

In einer bevorzugten Ausgestaltung des Verfahrens zur Lichtblattmikroskopie wird eine oben beschriebene, erfindungsgemäße Anordnung zur Lichtblattmikroskopie eingesetzt.

Die vorliegende Erfindung soll nun anhand von Ausführungsbeispielen erläutert werden. Es zeigt:

- die Fig. 1 ein aufrechtes Lichtblattmikroskop in 45°-Konfiguration nach dem Stand der Technik, wie oben beschrieben.
- die Fig. 2 ein inverses Lichtblattmikroskop in 45°-Konfiguration nach dem Stand der Technik, wie oben beschrieben.
- die Fig. 3 beispielhaft adhärente Zellen auf einem Objektträger, die damit eine dünnschichtige Probe bilden, wie oben beschrieben.
- die Fig. 4 ein erstes Ausführungsbeispiel der erfindungsgemäßen Anordnung zur Lichtblattmikroskopie.
- die Fig. 5 eine SLM-Phasenfunktion und deren Zusammensetzung für eine Variation des zweiten Ausführungsbeispiels der erfindungsgemäßen Anordnung zur Lichtblattmikroskopie.
- die Fig. 6 ein zweites Ausführungsbeispiel der erfindungsgemäßen Anordnung zur Lichtblattmikroskopie.
- die Fig. 7 ein drittes Ausführungsbeispiel der erfindungsgemäßen Anordnung zur Lichtblattmikroskopie.
- die Fig. 8 ein viertes Ausführungsbeispiel der erfindungsgemäßen Anordnung zur Lichtblattmikroskopie.

- die Fig. 9 ein fünftes Ausführungsbeispiel der erfindungsgemäßen Anordnung zur Lichtblattmikroskopie.
- die Fig. 10 ein sechstes Ausführungsbeispiel der erfindungsgemäßen Anordnung zur Lichtblattmikroskopie.
- die Fig. 11 ein siebtes Ausführungsbeispiel der erfindungsgemäßen Anordnung zur Lichtblattmikroskopie.
- die Fig. 12a, 12b und 12c verschiedene Scanregimes für einen Volumenscan einer Probe mit einer erfindungsgemäßen Anordnung zur Lichtblattmikroskopie
- die Fig. 13 ein Ausführungsbeispiel einer Vorrichtung zur Erzeugung paralleler Lichtblätter für eine erfindungsgemäße Anordnung zur Lichtblattmikroskopie.
- die Fig. 14 eine SLM-Phasenfunktion und deren Zusammensetzung für eine Erzeugung paralleler Lichtblätter mittels des Ausführungsbeispiels einer Vorrichtung zur Erzeugung paralleler Lichtblätter.
- die Fig. 15a ein achtes Ausführungsbeispiel der erfindungsgemäßen Anordnung zur Lichtblattmikroskopie in Draufsicht mit einem Sensor, der zur konfokalen Detektion eingerichtet ist
- die Fig. 15b den Sensor des achten Ausführungsbeispiels in Frontansicht
- die Fig. 16a ein neuntes Ausführungsbeispiel der erfindungsgemäßen Anordnung zur Lichtblattmikroskopie in Draufsicht mit einem Sensor, der zur konfokalen Detektion eingerichtet ist
- die Fig. 16b den Sensor des neunten Ausführungsbeispiels in Frontansicht

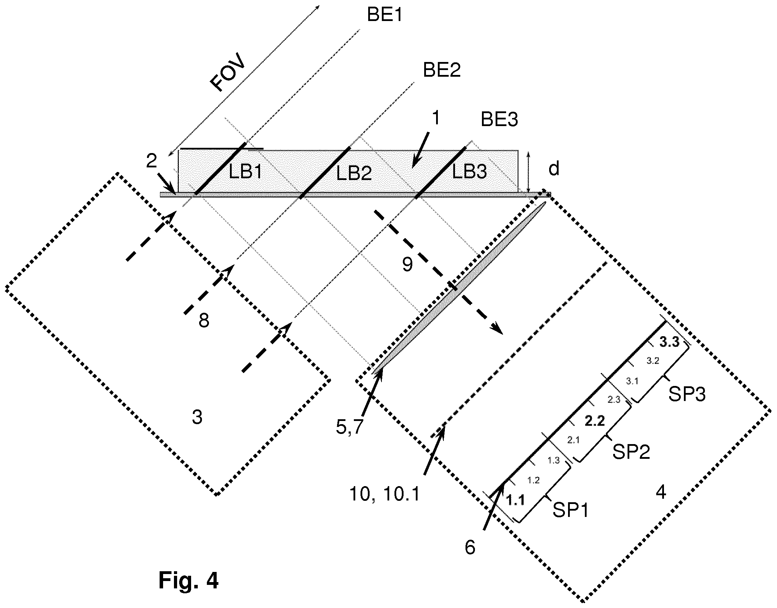

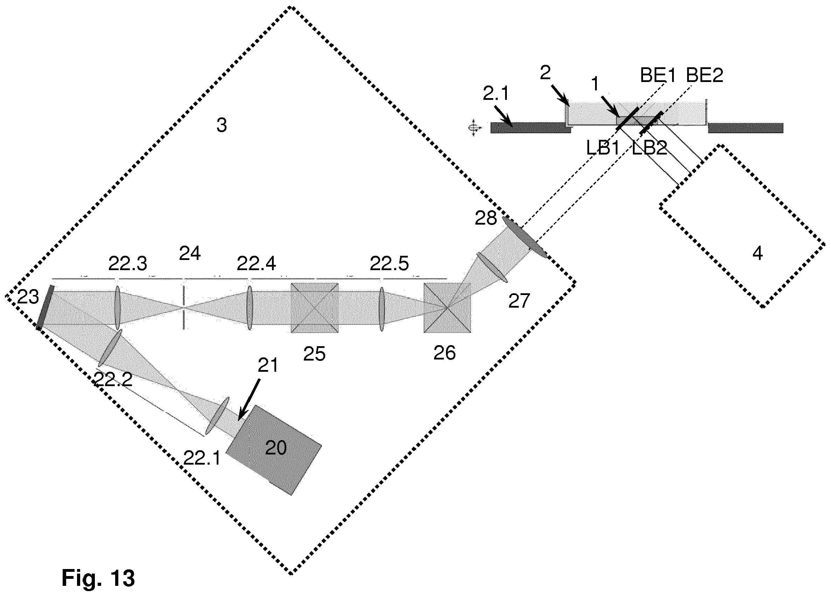

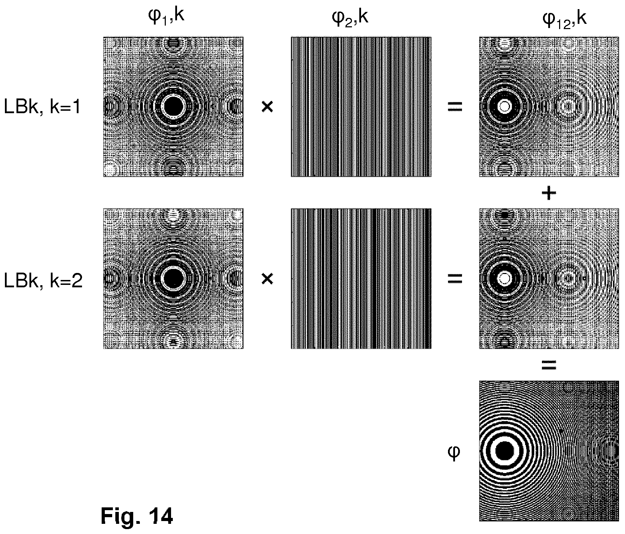

Alle erfindungsgemäßen Lösungen der Anordnung zur Lichtblattmikroskopie weisen eine Beleuchtungsvorrichtung 3 auf, in der mehrere zueinander parallele Lichtblätter LB1, LB2, LB3 zum Beleuchten zueinander paralleler Streifen der Probe 1 erzeugt werden. In den Fig. 4 und 6 bis 11 ist jeweils die Beleuchtungsrichtung 8 vermerkt. Während auf die Erzeugung solcher paralleler Lichtblätter LB1, LB2, LB3 in der Fig. 13 und 14 eingegangen wird, werden zunächst in den Fig. 4 bis Fig. 11 Ausführungsbeispiele der erfindungsgemäßen Anordnung zur Lichtblattmikroskopie beschrieben, die es ermöglichen, alle von der von den parallelen Lichtblättern LB1, LB2, LB3 beleuchteten Streifen der Probe 1 gleichzeitig scharf abzubilden.

Die Fig. 4 zeigt ein erstes Ausführungsbeispiel der erfindungsgemäßen Anordnung zur Lichtblattmikroskopie. In diesem Beispiel wird die Anordnung eines inversen Lichtblattmikroskops in 45°-Konfiguration unter Zuhilfenahme eines Phasenelements 10, hier eines Phasengitters 10.1, zur gleichzeitigen Abbildung mehrerer Ebenen einer Probe 1, also mehrerer von zueinander parallelen Lichtblättern LB1, LB2, LB3 beleuchteter Streifen der Probe genutzt. Die Probe 1 befindet sich auf einem Objektträger 2 in einer Probenebene 2.1 (in Fig. 4 nicht dargestellt). Sie hat eine Dicke d von etwa 20 μm. Beispielhaft wird die Probe 1 mit drei Lichtblättern LB1, LB2, LB3 beleuchtet, die jeweils eine Länge von zirka 35 μm aufweisen. Jedes der Lichtblätter LB1, LB2, LB3 definiert eine zugehörige Bildebene BE1, BE2, BE3. Da das Sichtfeld FOV eines verwendeten Kamerasensors 6 etwa 200 μm beträgt, können hier drei Ebenen, also die von drei Lichtblättern LB1, LB2, LB3 angeregten Streifen der Probe 1 gleichzeitig abgebildet werden.

Im Detektionsstrahlengang entlang der Detektionsachse 9 ist nun ein Phasengitter 10.1 angeordnet. Dieses Phasengitter 10.1 wirkt sich derart auf die Abbildung aus, dass einerseits die einzelnen Bildebenen BE1, BE2, BE3 nebeneinander und/oder untereinander auf den Sensor 6 der Kamera positioniert werden, so dass sich die Abbildungen der einzelnen Bildebenen BE1, BE2, BE3 nicht überlappen. Auf dem Sensor 6 sind also jeweils Sensorpositionen SP1, SP2, SP3 für jedes Lichtblatt LB1, LB2, LB3 reserviert. Andererseits findet zusätzlich eine Refokusierung statt, sodass die entsprechende Bildebene BE1, BE2, BE3, und damit insbesondere der entsprechende vom jeweiligen Lichtblatt LB1, LB2, LB3 angeregte Streifen der Probe 1, scharf auf den jeweiligen Bereich des Sensors SP1, SP2, SP3 abgebildet wird.

Die gesamte Bildebene BE1 wird hierbei auf den Sensor 6 an Position SP1 abgebildet, die Bildebene BE2 entsprechend auf die Sensorposition SP2 und die Bildebene BE3 auf die Sensorposition SP3. Da die Lichtblätter LB1, LB2, LB3 so positioniert sind, dass sich die detektierte Fluoreszenz der von den einzelnen Lichtblätter LB1, LB2, LB3 beleuchteten Streifen der Probe 1 nicht überlappt, wird der in der Probe 1 durch das Lichtblatt LB1 beleuchtete Streifen ohne störendes außerfokales Licht der Lichtblätter LB2 und LB3 im Bereich der Sensorposition SP1 in einer Unterposition 1.1 auf den Sensor 6 abgebildet. Die Fluoreszenz der Lichtblätter LB2 und LB3 wird unscharf auf die Unterpositionen 1.2 und 1.3 abgebildet. Entsprechend erhält man ein scharfes Abbild der von den Lichtblättern LB2 bzw. LB3 beleuchteten Streifen der Probe ohne störendes außerfokales Licht auf den Unterpositionen 2.2 bzw. 3.3 im Bereich der Sensorpositionen SP2 bzw. SP3.

In diese Anordnung können zusätzlich zum Gitter weitere Korrekturelemente eingeführt werden. Diese Methode ist zudem nicht auf eine 45°-Konfiguration beschränkt, sondern kann prinzipiell bei entsprechender Probenpositionierung auch in einem Standard-Lichtblattmikroskop angewandt werden. Einzig nachteilig an einer solchem im ersten Ausführungsbeispiel beschriebenen Ausgestaltung der erfindungsgemäßen Anordnung zur Lichtblattmikroskopie ist, dass das zur Verfügung stehende Licht nicht optimal genutzt wird. Dies zeigt sich darin, dass die Photonen beispielsweise aus dem Lichtblatt LB1 auf alle drei Sensorpositionen SP1, SP2, SP3 des Sensors 6 aufgeteilt werden, zur Probenrekonstruktion allerdings nur die Unterposition 1.1. herangezogen wird. Somit wird nur 1/n der emittierten Photonen tatsächlich genutzt, wobei n die Anzahl der abgebildeten Ebenen bzw. der zur Beleuchtung eingesetzten Lichtblätter ist.

Die im ersten Ausführungsbeispiels genutzten Eigenschaften des Phasengitters 10.1 können auch durch einen räumlichen Lichtmodulator (SLM) 10.2 mit entsprechender Phasenfunktion und Beleuchtung erzielt werden. Die Phasenfunktion ergibt sich hierbei aus einer Überlagerung grundlegender Phasenfunktionen.

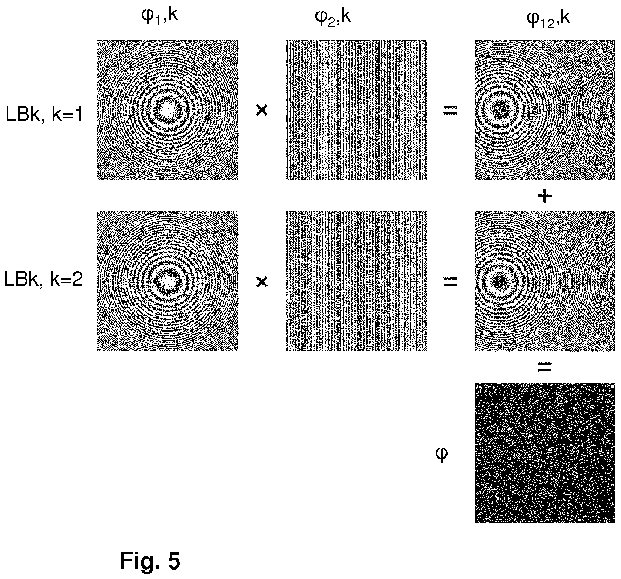

In der Fig. 5 ist der Aufbau einer solchen SLM-Phasenfunktion bzw. deren Zusammensetzung aus den Einzelkomponenten, also den grundlegenden Phasenfunktionen, am Beispiel zweier Lichtblätter dargestellt.

Eine Defokus-Transferfunktion $T_1(r) = \exp\left(\frac{\pi i r^2}{f_1}\right)$ mit der Brennweite $f_1$ einer virtuellen Linse, die so gewählt wird, dass die Lichtblattebene scharf abgebildet wird, und $r = \sqrt{x^2 + y^2}$, wobei x die x-Koordinate des SLM und y die y-Koordinate des SLM vorgibt, und die Koordinaten des SLM die jeweiligen Pixel beschreiben, wird so ausgelegt, dass die jeweilige beleuchtete Ebene scharf auf den Sensor 6, bzw. auf einen Detektor, abgebildet wird. Mit Hilfe der Transferfunktion eines blazed Gratings oder eines Keils $T_2(x,y) = \exp(ixd_x + iyd_y)$ mit der Position dx des Bildes auf dem Sensor 6 bzw. dem Sensorchip in x und der Position dy des Bildes auf dem Sensor 6 bzw. dem Sensorchip in y wird das Bild an der jeweiligen Stelle des Sensors 6 platziert. Die Kombination, also die kombinierte Transferfunktion, ergibt sich aus der Multiplikation der einzelnen Transferfunktionen $T_{12} = T_1 \cdot T_2$. Die kombinierte Transferfunktion $T_{12,k}$ wird für alle Lichtblätter k = 1,2,3,...,n berechnet. Die Gesamtphasenfunktion $\varphi$, die letztendlich auf den räumlichen Lichtmodulator (SLM) übertragen wird, ergibt sich aus der Addition der einzelnen kombinierten Transferfunktionen zu einer komplexen Gesamttransferfunktion $T = \sum_{k=1}^{n} T_{12,k}$ und der Ermittlung des Winkels dieser komplexen Transferfunktion T mit $\varphi$=angle(T).

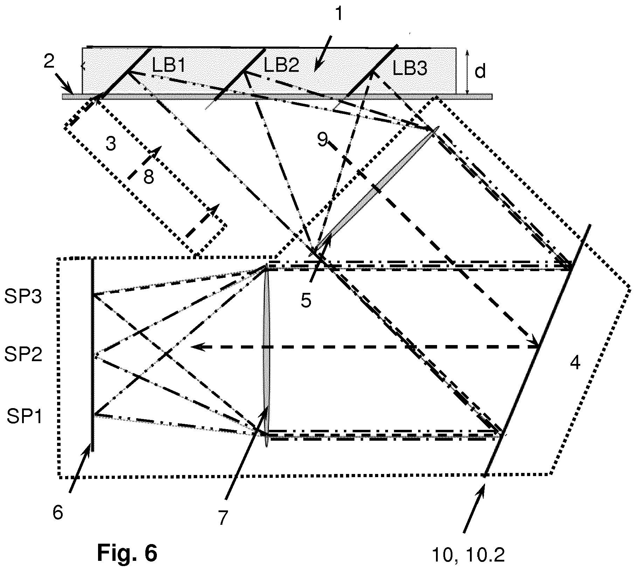

Die Fig. 6 zeigt ein zweites Ausführungsbeispiel der erfindungsgemäßen Anordnung zur Lichtblattmikroskopie. In diesem Beispiel wird wiederum die Anordnung eines inversen Lichtblattmikroskops in 45°-Konfiguration, hier jedoch unter Zuhilfenahme eines räumlichen Lichtmodulators (SLM) 10.2, zur gleichzeitigen Abbildung mehrerer, von zueinander parallelen Lichtblättern LB1, LB2, LB3 beleuchteter Streifen der Probe genutzt. Die Probe 1 befindet sich auf einem Objektträger 2. Der SLM 10.2 befindet sich hierbei in der Detektionsvorrichtung 4 in einem Frequenzraum, also beispielsweise in der Pupille eines Objektivs 5 der Abbildungsoptik 5, 7. Abgebildet werden die von den drei Lichtblättern LB1, LB2, LB3 beleuchteten Streifen der Probe 1 über eine Tubuslinse 7 wiederum auf einen Sensor 6 in die dem jeweiligen Lichtblatt LB1, LB2, LB3 zugeordnete Sensorposition SP1, SP2, SP3.

Wie auch im ersten Ausführungsbeispiel geht diese Abbildung auf die für die Gesamtdarstellung der Probe 1 genutzten Sensorpositionen SP1, SP2, SP3 wiederum einher mit einer Nutzung von nur 1/n der emittierten Photonen, für eine Anzahl von n abgebildeten Ebenen bzw. n parallel zueinander angeordneter Lichtblätter zur Beleuchtung der Probe 1. Auch hier kann zur chromatischen Korrektur zusätzlich ein Korrekturelement in den Strahlengang eingeführt werden.

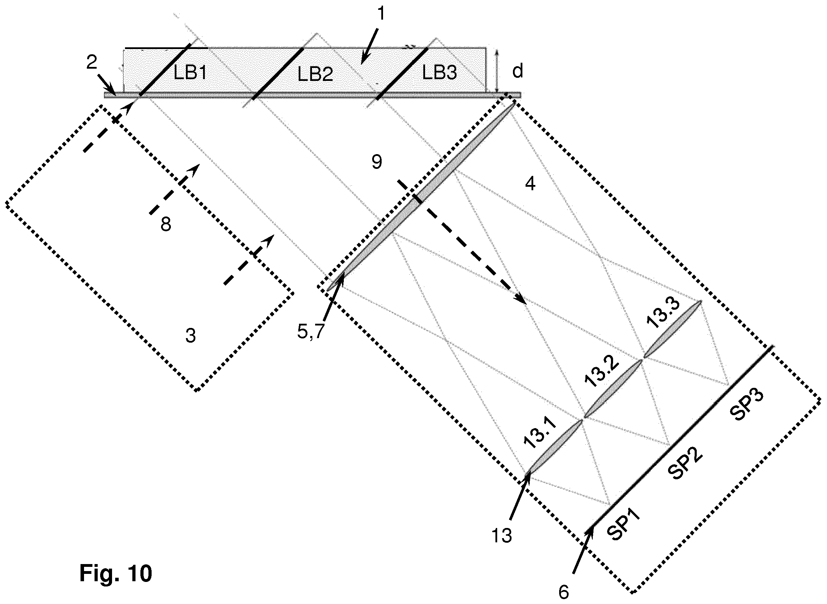

Analog zum unten dargestellten sechsten Ausführungsbeispiel, das in der Fig. 10 dargestellt ist, kann in einer Variation ein räumlicher Lichtmodulator (SLM) 10.2 jedoch auch im Zwischenbild anstelle eines Mikrolinsenarrays 13 angeordnet werden und dort die Phasenfunktion eines Mikrolinsenarrays 13 nachbilden. Dieser Ansatz hat den Vorteil, dass alle in der Probe emittierten Photonen für die Detektion genutzt werden können.

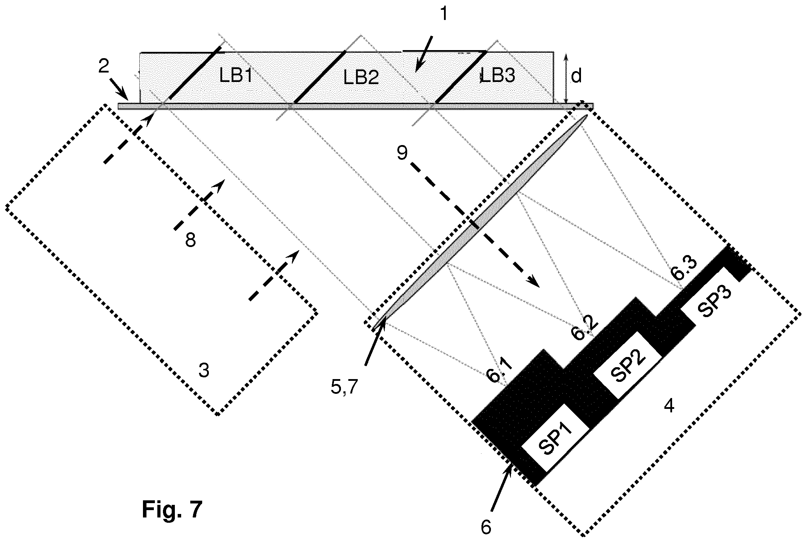

Die Fig. 7 zeigt ein drittes Ausführungsbeispiel der erfindungsgemäßen Anordnung zur Lichtblattmikroskopie wiederum in der Anordnung eines inversen Lichtblattmikroskops in 45°-Konfiguration, was diese Ausgestaltung der erfindungsgemäßen Anordnung zur Lichtblattmikroskopie aber nicht auf diese inverse 45° Anordnung beschränken soll. Die Probe 1 einer Dicke d von mehreren 10 µm befindet sich wiederum auf einem Objektträger 2.

Zur gleichzeitigen Abbildung dreier Ebenen einer Probe 1, also dreier von zueinander parallelen Lichtblättern LB1, LB2, LB3 beleuchteter Streifen der Probe 1, werden im dritten Ausführungsbeispiel drei Sensoren 6.1, 6.2, 6.3 genutzt, die in unterschiedlichen Abstand zur Tubuslinse 7 der Detektionsvorrichtung 4 angeordnet sind, derart, dass die Fokusebene des jeweiligen Lichtblatts LB1, LB2, LB3 mit der Detektionsebene des jeweiligen Sensors 6.1, 6.2, 6.3 aufeinander fällt. Eine Abwandlung hiervon, wie sie konkret in der Fig. 7 dargestellt ist, ist die Nutzung eines Stufensensors, also eines Sensors 6, der keine ebene Fläche bildet, sondern Stufen 6.1, 6.2, 6.3 aufweist. Die Höhe und Breite der Stufen 6.1, 6.2, 6.3 des Stufensensors ist dabei so angepasst, dass jeweils die von Lichtblatt LB1, LB2 bzw. LB3 beleuchteten Streifen der Probe 1 scharf auf die entsprechende Stufe, also die Sensorposition SP1, SP2 bzw. SP3 abgebildet wird.

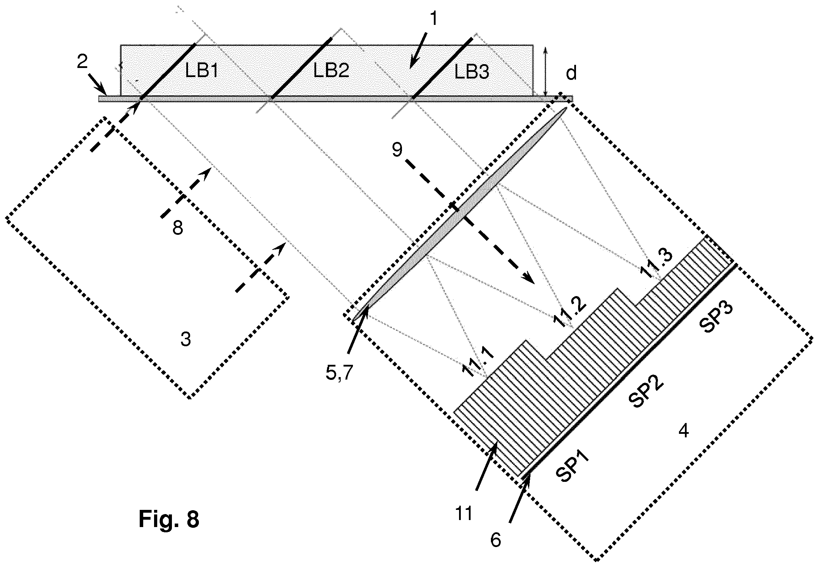

In der Fig. 8 ist ein viertes Ausführungsbeispiel der erfindungsgemäßen Anordnung zur Lichtblattmikroskopie dargestellt. Auch in diesem Beispiel wird eine inverse 45°-Lichtblattmikroskop-Konfiguration genutzt, was aber auch diese Ausgestaltung der erfindungsgemäßen Anordnung nicht auf diese Konfiguration beschränken soll. Die Probe 1 befindet sich wiederum auf einem Objektträger 2.

Unter Zuhilfenahme einer Faserplatte 11, die Glasfasern zur Lichtleitung enthält, werden drei von zueinander parallelen Lichtblättern LB1, LB2, LB3 beleuchtete Streifen der Probe 1 über ein Objektiv 5 der Detektionsvorrichtung 4 gleichzeitig scharf abgebildet und vom Sensor 6 detektiert. Hierfür weist die Faserplatte 11 eine stufenförmige Gestalt auf. Der von dem jeweiligen Lichtblatt LB1, LB2 bzw. LB3 beleuchtete Streifen einer Probe 1 wird jeweils auf der zu diesem Lichtblatt LB1, LB2 bzw. LB3 gehörenden Stufe dieser stufenförmigen Faserplatte 11, also ihrem Faserplattenabschnitt 11.1, 11.2, 11.3, scharf abgebildet, auf die die Fokusebene des jeweiligen Lichtblatts LB1, LB2 bzw. LB3 fällt. Das Licht koppelt in die Glasfasern der Faserplatte 11 und wird auf die gegenüberliegende flache Seite der Faserplatte 11 geleitet. Hier befindet sich ein flacher Sensor 6, der im direkten Kontakt mit der flachen Seite der Faserplatte 11 steht oder sich im geringem Abstand von einigen Mikrometern von dieser Faserplatte 11 entfernt befindet, und der die von den Glasfasern auf den Sensor 6 geleiteten Signale detektiert - an den für das jeweilige Lichtblatt LB1, LB2, LB3 vorgesehenen Sensorpositionen SP1, SP2, SP3.

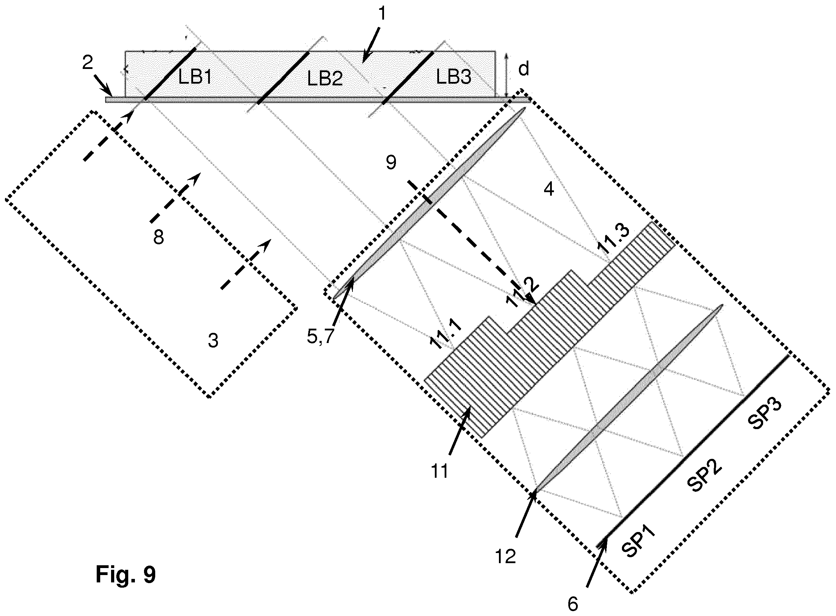

In einer Abwandlung des vierten Ausführungsbeispiels zeigt die Fig. 9 ein fünftes Ausführungsbeispiel der erfindungsgemäßen Anordnung zur Lichtblattmikroskopie, in der sich wiederum eine stufenförmigen Faserplatte 11 mit den den Lichtblättern LB1, LB2, LB3 zugeordneten Faserplattenabschnitten 11.1, 11.2, 11.3 derart entlang der Detektionsachse 9 im Detektionsstrahlengang der Detektionsvorrichtung 4 befindet, dass jedes der drei Lichtblätter LB1, LB2, LB3 scharf auf seinem Faserplattenabschnitt 11.1, 11.2, 11.3, also einer Stufe der Faserplatte 11, abgebildet wird, das Licht wiederum in die Glasfasern einkoppelt, und schließlich von der rückwärtigen, flachen Seite der Faserplatte 11 mittels einer zusätzlich im Detektionsstrahlengang angeordneten Teleskoplinse 12 auf einen Sensor 6 bzw. Detektor scharf abgebildet wird.

Sowohl im vierten als auch fünften Ausführungsbeispiel müssen die einzelnen Glasfasern der Faserplatte 11 nicht zwangsläufig gerade sein. Es ist auch denkbar, dass die Glasfasern gebogen sind und somit die Endfläche der Faserplatte 11 nicht mehr senkrecht zur ursprünglichen Detektionsachse 9 steht. Hierdurch werden die Abbildungseigenschaften nicht verändert, wohl aber Freiheiten in der Konstruktion und Bauform einer solchen Anordnung zur Lichtblattmikroskopie geschaffen: Der Sensor 6 bzw. Detektor kann dann beliebig platziert werden.

Die Fig. 10 zeigt ein sechstes Ausführungsbeispiel der erfindungsgemäßen Anordnung zur Lichtblattmikroskopie. Ähnlich aufgebaut wie die Anordnungen der schon beschriebenen Ausführungsbeispiele bezeichnen gleiche Referenzzeichen hierin auch gleiche Merkmale. Im sechsten Ausführungsbeispiel der erfindungsgemäßen Anordnung zur Lichtblattmikroskopie ist in einer Zwischenbildebene im Detektionsstrahlengang zwischen der Tubuslinse 7 und dem Sensor 6 ein Mikrolinsenarray 13 angeordnet. Die Probe 1 wird wiederum von drei Lichtblättern LB1, LB2, LB3 beleuchtet. Jede Mikrolinse 13.1, 13.2, 13.3 des Mikrolinsenarrays ist einem Lichtblatt LB1, LB2, LB3 zugeordnet. Die Mikrolinsen 13.1, 13.2, 13.3 weisen eine entsprechend unterschiedliche Brechkraft auf, und korrigieren die Defokussierung der jeweiligen einem Lichtblatt LB1, LB2, LB3 zugeordneten Ebene. Dadurch werden alle drei beleuchteten Streifen der Probe 1 scharf in die entsprechende Sensorposition SP1, SP2, SP3 auf einen flachen Sensor 6 abgebildet.

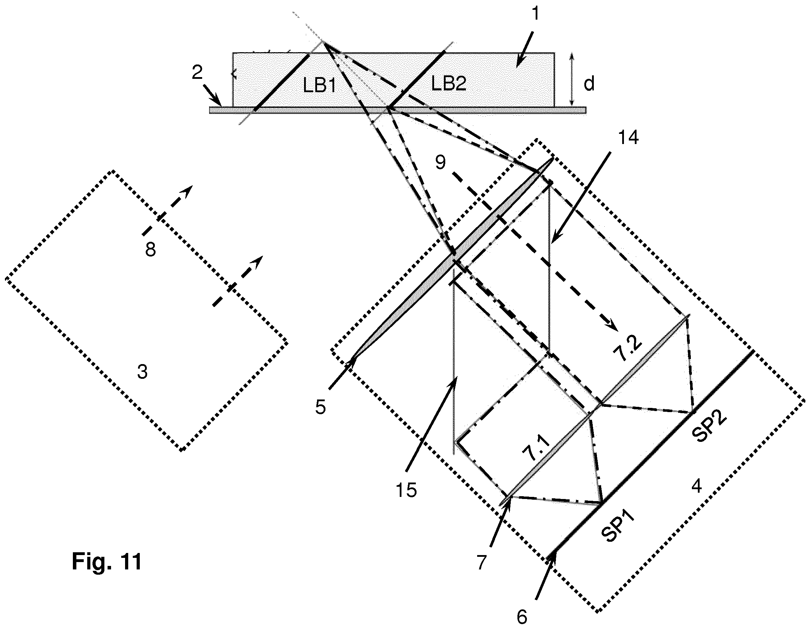

In der Fig. 11 ist ein siebtes Ausführungsbeispiel der erfindungsgemäßen Anordnung zur Lichtblattmikroskopie dargestellt, in inverser 45°-Konfiguration mit einer Biplane-Detektion zur gleichzeitigen Abbildung zweier von zueinander parallelen Lichtblättern LB1, LB2, LB3 beleuchteter Streifen der Probe 1. Die Probe 1 einer Dicke d von 20 µm befindet sich wiederum auf einem Objektträger 2.

In der DE 10 2009 060 490 A1 des Anmelders ist ein Verfahren zur dreidimensionalen photoaktivierten Lokalisationsmikroskopie (3D-PALM) und ein entsprechendes Mikroskop beschrieben. Ähnlich dem Zweiebenen(Biplane)-Ansatz des 3D-PALM können auch mit einem Lichtblattmikroskop, in dem zwei Streifen einer Probe 1 durch zwei parallel zueinander angeordnete Lichtblätter LB1, LB2 beleuchtet werden, beide Ebenen auf einen Sensor 6 abgebildet werden. Hierzu wird in den Detektionsstrahlengang ein Strahlteiler 14, der den Detektionsstrahlengang in zwei Teilstrahlen teilt, sowie ein Spiegel, der den zweiten, durch den Strahlteiler 14 abgelenkten Teilstrahl wiederum auf den Sensor 6 lenkt, eingefügt. Die Teilstrahlen werden mit einer Tubuslinse 7.1, 7.2 nebeneinander in entsprechende Sensorpositionen SP1, SP2 auf den Sensor 6 der Kamera abgebildet, wobei durch verschieden lange optische Wege unterschiedliche Ebenen in der Probe 1 scharf abgebildet werden. Bei dem Strahlteiler 14 kann es sich im Fall von zwei Teilstrahlen zum Beispiel um einen 50:50-Strahlteiler 14 oder auch um einen wellenlängenabhängigen Strahlteiler 14 handeln. In letzterem Fall sollte mit Fluoreszenzstrahlung unterschiedlicher Wellenlängen aus den von den beiden Lichtblättern LB1, LB2 beleuchteten Streifen der Probe 1 gearbeitet werden. Ähnlich der DE 10 2009 060 490 A1 sind Ausführungsformen mit variabel einstellbaren Objektebenenabständen möglich.

Eine solche Anordnung in der Detektionsvorrichtung 4 ist auch als Multiebenen(Multiplane)-Anordnung bei einer Beleuchtung der Probe 1 durch mehr als zwei zueinander parallele Lichtblätter LB1, LB2, LB3 möglich: Hierfür muss ein Strahlteiler 14 im Detektionsstrahlengang angeordnet werden, der diesen in mehrere Teilstrahlen teilt.

Alle erfindungsgemäßen Anordnungen, die hier in den Ausführungsbeispielen beschrieben wurden, können zusätzlich mit spektralen Filtern bzw. Strahlteilern versehen sein, um unterschiedliche Wellenlängen auf verschiedenen Teilen des Detektors abzubilden. In diesem Fall darf die Fluoreszenz der einzelnen Lichtblätter überlappen.

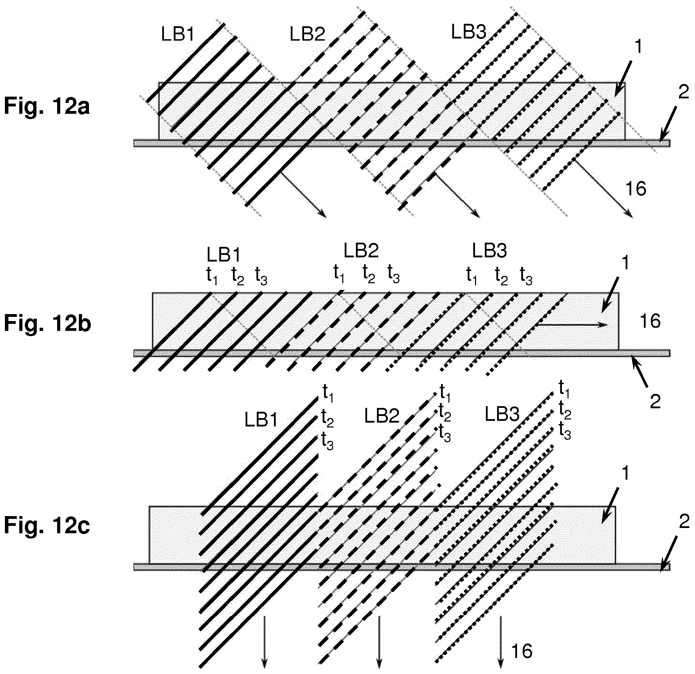

Um nun einen Volumenscan einer Probe 1 durchzuführen, und damit letztlich die gesamte Probe 1 darstellen zu können, sind in den Fig. 12a, 12b und 12c verschiedene Scanregimes für einen Volumenscan einer Probe 1 mit einer erfindungsgemäßen Anordnung zur Lichtmikroskopie dargestellt.

Um das gesamte Volumen der Probe 1 aufzunehmen, ist es notwendig, eine Relativbewegung zwischen Probe 1 und den Lichtblättern LB1, LB2, LB3 durchzuführen, um so für jedes Lichtblatt LB1, LB2, LB3 einen z-Stack aufzunehmen. Diese einzelnen z-Stacks werden anschließend zu einem 3D-Volumen der Probe 1 verrechnet. Die Relativbewegung kann durchgeführt werden, indem die Probe 1 bzw. die Lichtblätter LB1, LB2, LB3 verfahren werden. Hierbei sind bevorzugt drei Scanregimes denkbar: Eine Relativbewegung parallel zur Detektionsrichtung, wie in der Fig. 12a dargestellt, eine Relativbewegung parallel zum Objektträger 2, wie in der Fig. 12b dargestellt und eine Relativbewegung senkrecht zum Objektträger 2, wie in der Fig. 12c dargestellt.

Die Figuren 12a bis 12c zeigen dabei jeweils drei parallel zueinander angeordnete Lichtblätter LB1, LB2, LB3 zu unterschiedlichen Zeitpunkten $t_1$, $t_2$, $t_3$ etc. auf ihrem Weg durch die Probe 1. Besonders vorteilhaft ist hierbei eine Scanrichtung 16 in Detektionsrichtung der Fig. 12a bzw. eine Scanrichtung 16 parallel zum Objektträger 2 der Fig. 12b, da hierbei die kürzest mögliche Lichtblattlänge verwendet werden kann. Die Bewegung parallel zum Objektträger 2 der Fig. 12b bietet zusätzlich den Vorteil, dass der Energieeintrag in das Probenvolumen am geringsten ist und somit ein Bleichen der Probe 1 bzw. eine Phototoxidität der Strahlung auf die Probe 1 vermindert wird.

Ein Ausführungsbeispiel einer Vorrichtung zur Erzeugung parallel zueinander angeordneter Lichtblätter LB1, LB2 mit zueinander verschiedener Fokusebene in einer Beleuchtungsvorrichtung 3 zur entsprechenden Beleuchtung einer Probe 1 mit mehreren parallel zueinander angeordneten Lichtblättern LB1, LB2 für eine Anordnung und ein Verfahren zur Lichtblattmikroskopie zeigt die Fig. 13.

Ein Lasermodul 20 erzeugt einen gaußförmigen Laserstrahl 21. Dieser Laserstrahl 21 wird mit den Linsen 22.1 und 22.2 aufgeweitet, so dass er den gesamten im Ortsfrequenzraum stehenden, d.h., in der zur Pupille konjugierten Ebene stehenden SLM 23 gleichmäßig ausleuchtet. Der räumliche Lichtmodulator (SLM) 23 ist in diesem Beispiel ein nematischer SLM, also ein räumlicher Lichtmodulator, der eine Flüssigkristallphase enthält, deren Flüssigkristallmoleküle eine Vorzugsrichtung aufweisen. Auf dem SLM 23 wird ein entsprechendes Phasenmuster, die Gesamtphasenfunktion $\varphi$, kodiert, deren Erzeugung in Fig. 14 dargestellt ist. Dadurch wird das Spektrum mehrerer paralleler, fokusverschobener Lichtblätter LB1, LB2 erzeugt. Mit der Linse 22.3 wird das Spektrum der SLM-Ebene in den Ortsraum transferiert. Hier kann eine Filterung, zum Beispiel mit einer Blende 24, stattfinden. Die Blendenebene wird mit den Linsen 22.4 und 22.5 auf einen Umlenkspiegel 26 abgebildet, der die mehreren parallel zueinander angeordneten Lichtblätter, die in den Strahl kodiert sind, über die Abbildungsoptik 27, 28, einer Kombination aus Tubuslinse 27 und Beleuchtungsobjektiv 28, auf die Probe 1 lenkt, die sich auf einem transparenten Objektträger 2 in einer Probenebene 2.1 befindet. Zwischen den Linsen 22.4 und 22.5 sorgt ein Scanner-Spiegelpaar 25 für die entsprechende Ablenkung der mehreren parallel zueinander angeordneten Lichtblätter, die in den Strahl kodiert sind, in x- und y-Richtung.

In den beiden von den Lichtblättern LB1, LB2 beleuchteten Streifen der Probe 1 wird jeweils eine Fluoreszenzstrahlung angeregt, die mit einer beliebigen in der Lichtblattmikroskopie eingesetzten Detektionsvorrichtung zeitsequentiell oder aber mit einer bevorzugten Detektionsvorrichtung 4 einer erfindungsgemäßen Anordnung zur Lichtblattmikroskopie gleichzeitig detektiert werden kann, wobei die Detektionsvorrichtung 4 in der Fig. 13 nur angedeutet ist.

In der Fig. 14 ist der Aufbau einer SLM-Phasenfunktion $\varphi$ bzw. deren Zusammensetzung aus den Einzelkomponenten, also den grundlegenden Phasenfunktionen, am Beispiel der Erzeugung zweier paralleler gaußförmiger Lichtblätter dargestellt, die eine unterschiedliche Fokusposition haben.

$$T_1(r) = \exp\left(\frac{\pi i r^2}{f_1}\right)$$

Eine Defokus-Transferfunktion mit der Brennweite $f_1$ einer virtuellen Linse und $r = \sqrt{x^2 + y^2}$, wobei x die x-Koordinate des SLM und y die y-Koordinate des SLM vorgibt, und die Koordinaten des räumlichen Lichtmodulators (SLM) die jeweiligen Pixel beschreiben, wird so ausgelegt, dass der jeweilige Fokus in der gewünschten Ebene BE1, BE2 der Lichtblätter LB1, LB2 liegt.

Mit Hilfe der Transferfunktion eines blazed Gratings oder eines Keils $T_2(x,y) = \exp(ixd_x + iyd_y)$, mit der Position dx des Lichtblattes LB1, LB2 in der Probe 1 in x und der Position dy des Lichtblattes LB1, LB2 in der Probe 1 in y, wird das Lichtblatt LB1, LB2 in der Probe 1 positioniert. Die Kombination, also die kombinierte Transferfunktion, ergibt sich aus der Multiplikation der einzelnen Transferfunktionen $T_{12} = T_1 \cdot T_2$. Die kombinierte Transferfunktion $T_{12,k}$ wird für alle Lichtblätter k = 1,2,3,...,n berechnet. Die Gesamtphasenfunktion $\varphi$, die letztendlich auf den räumlichen Lichtmodulator (SLM) 23 der Fig. 13 übertragen wird, ergibt sich aus der Addition der einzelnen kombinierten Transferfunktionen zu einer komplexen Gesamttransferfunktion $T = \sum_{k=1}^{n} T_{12,k}$ und der Ermittlung des Winkels dieser komplexen Transferfunktion T mit $\varphi$=angle(T).

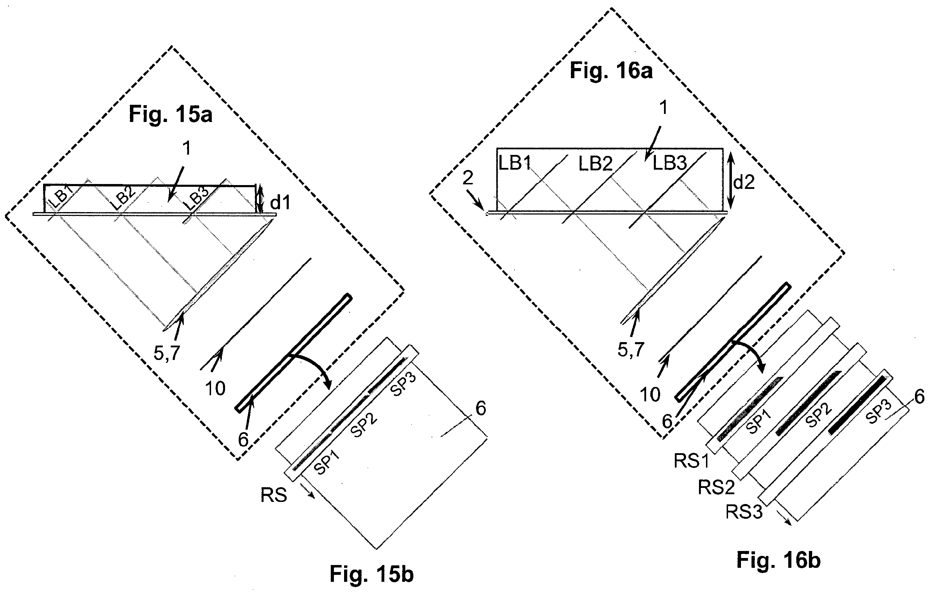

Um die Fluoreszenzstrahlung aus verschiedenen Streifen zueinander paralleler Lichtblätter LB1, LB2, LB3, die gleiche Wellenlängen aufweisen, trotz Überlappungen ihrer Projektionen in Detektionsrichtung 9 ohne Störungen durch außerfokales Licht aus den Streifen benachbarter Lichtblätter LB1, LB2, LB3 detektieren zu können, zeigt die Fig. 15a ein achtes Ausführungsbeispiel der erfindungsgemäßen Anordnung zur Lichtblattmikroskopie in Draufsicht mit einem Sensor 6, der zur konfokalen Detektion eingerichtet ist. Diese Darstellung der Anordnung der optischen Elemente untereinander, von den mit den Lichtblättern LB1, LB2, LB3 beleuchteten Streifen einer Probe 1 auf einem Objektträger 2 bis hin zum Sensor 6, die dem ersten Ausführungsbeispiel der Fig. 4 entspricht, ist prinzipiell durch jede der Anordnungen des zweiten bis siebten Ausführungsbeispiels der Fig. 6 bis 11, aber auch durch hier nicht dargestellte andere Ausführungen ersetzbar. Wichtig in Fig. 15a ist, dass es sich um eine sehr dünne Probe 1 handelt, deren Dicke d in einem Bereich zwischen 10µm und 30 µm liegt, ggf. sogar weniger als 10 µm beträgt. Im Fall einer solch dünnen Probe 1 ist eine konfokale Detektion der Fluoreszenzstrahlung aus mehreren parallel zueinander angeordneten Lichtblättern LB1, LB2, LB3, die nebeneinander auf dem Sensor 6 abgebildet werden, bei Nutzung einer CMOS-Kamera als Sensor 6 mit einem einzigen Rolling Shutter RS möglich. Dies ist in der Fig. 15b dargestellt, die den Sensor 6 des achten Ausführungsbeispiels in Frontansicht zeigt. Die Fluoreszenzstrahlung, die durch die parallel zueinander angeordneten Lichtblätter LB1, LB2, LB3 in dieser dünnen Probe 1 erzeugt wird, wird dabei im "Rolling Shutter" RS nebeneinander detektiert. Dementsprechend muss der Sensor 6 relativ zu den Lichtblättern LB1, LB2, LB3 wie in Fig. 15b orientiert werden.

Bei längeren Lichtblättern LB1, LB2, LB3 bzw. dickeren Proben 1 "passen" die Lichtblätter LB1, LB2, LB3 - bzw. deren Fluoreszenzstrahlung ggf. nicht mehr innerhalb des Rolling Shutter RS nebeneinander. Dann kann die Parallelisierung in der Detektion entlang der Bewegungsrichtung der Rolling Shutter RS erfolgen, und ein Rolling Shutter RS1, RS2, RS3 je Lichtblatt LB1, LB2, LB3 generiert werden. Ist also die Probe 1 wesentlich dicker als 20 oder 30µm, so ist eine konfokale Detektion mit mehreren Rolling Shutters RS1, RS2, RS3 nötig. Ein solches neuntes Ausführungsbeispiel der erfindungsgemäßen Anordnung zur Lichtblattmikroskopie, mit einem Sensor 6, der zur konfokalen Detektion von dickeren Proben 1 eingerichtet ist, ist in Draufsicht in der Fig. 16a dargestellt. Diese Darstellung der Anordnung der optischen Elemente untereinander, von den mit den Lichtblättern LB1, LB2, LB3 beleuchteten Streifen einer Probe 1 auf einem Objektträger 2 bis hin zum Sensor 6, die dem ersten Ausführungsbeispiel der Fig. 4 entspricht, ist prinzipiell durch jede der Anordnungen des zweiten bis siebten Ausführungsbeispiels der Fig. 6 bis 11, aber auch durch hier nicht dargestellte andere Ausführungen ersetzbar.

Die Fig. 16b zeigt nun den Detektor 6 des neunten Ausführungsbeispiel in Frontansicht: Durch eine geeignete Ansteuerung laufen mehrere Rolling Shutter RS1, RS2, RS3 räumlich versetzt über einen CMOS Sensor 6. Die Parallelisierung erfolgt also entlang der anderen Sensorkoordinate. Dazu müssen die Mittel zur Anpassung der Abbildungslängen wie Gitter Mikrolinsen etc., zur kongruenten Deckung der Fokusebene des jeweiligen Lichtblatts LB1, LB2, LB3 mit seiner Detektionsebene, entsprechend ihrer Wirkung um 90 Grad gedreht werden. In diesem Fall wird der ungestört überstreichbare Sensorbereich je Rolling Shutter RS1, RS2, RS3 auf den n-ten Teil der Sensorgröße, mit der Anzahl der Rolling Shutter bzw. Lichtblätter n, eingeschränkt, was wiederum zu einer Einschränkung des nutzbare Sehfelds in Lichtblatt-Scan-Richtung führt.

Neben den in den Fig. 15 / 15a und 16 / 16a gezeigten Ausführungsbeispielen sind auch weitere Alternativlösungen für eine konfokale Detektion mehrerer zueinander paralleler Lichtblätter möglich: Die kommerziell erhältlichen sCMOS-Kameras verwenden zur Beschleunigung der Bildrate bei großem Bildfeld zwei nebeneinandergesetzte Sensorhälften, die getrennt ausgelesen werden. Dies bedingt, dass die sCMOS-Kameras zwei "Rolling Shutter" aufweisen. Wenn diese in die gleiche Richtung laufen, kann eine solche Kamera direkt für die hier vorgeschlagene Parallelisierung, in diesem Fall um den Faktor zwei verwendet werden.

Bei den derzeit kommerziell verfügbaren sCMOS-Kamerasystemen laufen die beiden Rolling Shutter allerdings in entgegengesetzter Richtung. Auch eine solche Kamera lässt sich jedoch für eine Zweifach-Parallelisierung der Detektion verwenden, indem noch eine optische Invertierung für einen der Kanäle eingeführt wird. Eine solche optische Invertierung kann durch eine weitere Abbildung, z.B. mittels eines Mikrolinsenarrays, für eine Sensorhälfte erfolgen. Eine optische Invertierung ist auch möglich durch eine Spiegelanordnung mit einer ungerader Anzahl von Reflektionen. Und nicht zuletzt ist eine optische Invertierungmöglich mit einem invertierenden Prisma, wie beispielsweise einem Dachkant-Pentaprisma, das ebenfalls eine ungerade Anzahl von Reflektionen aufweist. Diese Variante ist besonders vorteilhaft, da durch die Passage der Strahlung durch ein Glasmaterial hindurch und die Faltung des Strahlengangs durch das Prisma außer der Invertierung der Abbildung auch eine Schnittweitenveränderung eingeführt wird, die dann auch gleich zu der für die Parallelisierung erforderliche Verlagerung der Fokusebene verwendet und dementsprechend ausgelegt werden kann.

Ebenso könnte die Scanrichtung des zweiten Lichtblatts jedoch auch in Anregung invertiert werden, um eine solche Kamera mit gegenläufigen Rolling Shutters direkt zu verwenden. Dies kann über eine Pupillenteilung erfolgen, wozu ein zweiter Beleuchtungsstrahlengang und ein zweiter Scanner erforderlich wäre.

Eine weiteres Ausführungsbeispiel einer Konfokaldetektion ist die Realisierung einer "digitale Schlitzblende" mit einer sehr schnellen Kamera: Je Lichtblattposition wird ein Kameraframe aufgezeichnet, und nur die Pixel, die der jeweiligen Lichtblattposition entsprechen, werden ausgewertet. Allerdings muss hierbei für jede Lichtblattposition ein Kamerabild aufgenommen und ausgewertet werden.

Auch kann mit einem zweiten Scanner im Detektionsstrahlengang eine Descan-Anordnung realisiert werden. Dabei wird der zweite Scanner mit dem Lichtblatt-Scanner so synchronisiert, dass die Linie ortsfest bleibt. Damit kann ein Liniensensor, oder ein schneller Flächensensor mit digitaler Schlitzblende wie oben beschrieben, oder aber ein schneller Flächensensor mit Anordnung einer echten konfokalen Schlitzblende im Strahlengang vor dem Flächensensor verwendet werden.

Wie bereits erwähnt, ist eine strukturierte Beleuchtung eine weitere Möglichkeit zur Auflösungssteigerung und zur Unterdrückung des Hintergrunds, d.h. der außerfokalen Anteile anderer Lichtblätter bei Detektion der Fluoreszenzstrahlung eines Lichtblatts.

Die inkohärente Strukturierung der Beleuchtung geht von einem gescannten Lichtblatt aus, also von einem Lichtblatt, das durch den Rastervorgang eines Strahls wie beispielsweise eines Gauss-Strahls, eines Besselstrahls oder eines ähnlichen nichtbeugungsbegrenzten Strahls, aufgespannt wird, wobei der Rastervorgang schnell gegenüber der Kamerabelichtungszeit ist. Wird nun die Belichtung durch den Laser zu genau definierten Zeitpunkten während dieses Rastervorgangs beispielsweise durch "Blankings", die durch akusto-optischen Modulatoren gebildet werden können, unterbrochen, dann kann ein Gitter "in die Probe geschrieben" werden. Im Falle einer Beleuchtung mit drei zueinander parallelen Lichtblättern muss dann beispielsweise in den zwei darauffolgenden Scans des gleichen Probenbereichs das Gitter um 1/3 der Gitterperiode verschoben werden, um eine entsprechende Phasenverschiebung zu erzeugen. Dies wird durch eine zeitliche Verschiebung des "Blankings" erreicht. Anschließend werden die drei Bilder verrechnet, um die außerfokalen Anteile zu eliminieren.

Für eine kohärente Strukturierung der Beleuchtung wird das Gitter bzw. die Strukturierung durch Interferenz erzeugt. Beispiele solcher kohärenter Strukturierungen sind von Gustafsson in "Surpassing the lateral resolution limit by a factor of two using structured illumination microscopy", J.Microsc., 2000, 198(2), 82-87, und im Zusammenhang mit der Lichtblattmikroskopie von Chen et al. in "Lattice light-sheet microscopy: Imaging molecules to embryos at high spatiotemporal resolution", Science, 2014, 346, 6208: 1257998 oder in WO 2014/005682 A2 beschrieben.

Für die hier behandelte Parallelisierung der Lichtblattmikroskopie für dickere Proben können beide Varianten der Strukturierung zur Unterdrückung unerwünschter Hintergrundfluoreszenz, insbesondere der Hintergrundfluoreszenz der jeweils anderen Lichtblätter, eingesetzt werden. Dabei sind wiederum folgende Betriebsmodi für eine synchrone Beleuchtung einer Probe mit mehreren zueinander parallelen Lichtblättern möglich:

Eine inkohärente Strukturierung der Beleuchtung kann einfarbig durch n Lichtblätter gleicher Wellenlänge erfolgen. Die Strukturierung wird realisiert durch "Blanking", also Unterbrechungen des Rastervorgangs, die erzeugt werden durch AOTF, "Acousto-optical tunable filter", also einem Akusto-optischen Modulator. Eine Phasenverschiebung erfolgt durch zeitliche Verschiebung des "Blankings" während des Lichtblatt-Scans.

Eine inkohärente Strukturierung der Beleuchtung kann mehrfarbig durch n Lichtblätter mit n Wellenlängen erfolgen, die auf n Sensorbereichen detektiert werden. Die Strukturierung wird realisiert durch simultanes "Blanking" mittels AOTF für die n Wellenlängen. Eine Phasenverschiebung erfolgt durch zeitliche Verschiebung des "Blankings" während des Lichtblatt-Scans.

Eine Beleuchtung mit kohärenter Strukturierung der Lichtblätter kann einfarbig durch n Lichtblätter gleicher Wellenlänge erfolgen. Die Strukturierung kann bei einigen vorteilhaften Strahlformen wie beispielsweise bei einem $Sinc^3$-Strahl oder einem Mathieu-Strahl oder einer kohärenten Überlagerung von Besselstrahlen durch geeignete Wahl des Phasenmusters auf dem SLM intrinsisch vorhanden sein.. Eine Phasenverschiebung erfolgt durch Verschieben des strukturierten Lichtblatts mittels eines Scanners.

Eine Beleuchtung mit kohärenter Strukturierung der Lichtblätter kann mehrfarbig durch n Lichtblätter mit n Wellenlängen erfolgen. Die Strukturierung kann bei einigen vorteilhaften Strahlformen wie beispielsweise bei einem $Sinc^3$-Strahl oder einem Eine Beleuchtung mit kohärenter Strukturierung der Lichtblätter kann mehrfarbig durch n Lichtblätter mit n Wellenlängen erfolgen. Die Strukturierung kann bei einigen vorteilhaften Strahlformen wie beispielsweise bei einem $Sinc^3$-Strahl oder einem Mathieu-Strahl oder einer kohärenten Überlagerung von Besselstrahlen durch geeignete Wahl des Phasenmusters auf dem SLM intrinsisch vorhanden sein. Im Fall von n Lichtblättern mit n Farben ist das Phasenmuster auf dem SLM für die Lichtblätter unterschiedlicher Farbe parallelisiert einzustellen. Eine Phasenverschiebung erfolgt durch Verschieben der strukturierten Lichtblätter mittels eines Scanners. Hier ist zu beachten, dass die Strukturierung für die Lichtblätter unterschiedlicher Wellenlänge gleich zu wählen ist, wenn die Phasenverschiebung für alle Lichtblätter über einen gemeinsamen Scanner erfolgt.

Auch können die erfindungsgemäßen Anordnungen zur Lichtblattmikroskopie eine Probe 1 auch mit mehr als drei zueinander parallel angeordneten Lichtblättern beleuchten: Eine Erläuterung der Anwendungsbeispiele unter Nutzung von zwei oder drei parallel zueinander angeordneten Lichtblättern LB1, LB2, LB3 ist hier des einfacheren Verständnisses halber erfolgt.

Eine auf Vorrichtungsmerkmale bezogen Beschreibung gilt bezüglich dieser Merkmale analog für das entsprechende Verfahren, während Verfahrensmerkmale entsprechend funktionelle Merkmale der beschriebenen Vorrichtung darstellen.

**Patentansprüche**

1. Anordnung zur Lichtblattmikroskopie, umfassend

   - eine Probenebene (2.1) zur Anordnung einer Probe (1)
   - eine Beleuchtungsvorrichtung (3) mit einer Lichtquelle und einer Beleuchtungsoptik, eingerichtet zur Erzeugung eines ersten Lichtblatts (LB1), das nichtparallel zur Probenebene (2.1) verläuft, zur Beleuchtung eines ersten Streifens der Probe (1) und zur Anregung einer Fluoreszenzstrahlung in diesem ersten Streifen der Probe (1), und
   - eine Detektionsvorrichtung (4) mit einem Sensor (6) zur Detektion der Fluoreszenzstrahlung, mit einer Abbildungsoptik zur Abbildung der Fluoreszenzstrahlung des ersten Streifens der Probe (1) in eine Detektionsebene des Sensors (6), und mit einer Detektionsachse (9), die mit dem ersten Lichtblatt einen Winkel aus einem Winkelbereich von 70° bis 110° bildet, insbesondere mit einer zum ersten Lichtblatt senkrechten Detektionsachse (9),

   **dadurch gekennzeichnet,**

   - **dass** die Beleuchtungsvorrichtung (3) eingerichtet ist zur Erzeugung mindestens eines zum ersten Lichtblatt (LB1) parallel angeordneten, jedoch in Detektionsrichtung, also entlang der Detektionsachse (9), wie auch in Beleuchtungsrichtung (8) zum ersten Lichtblatt (LB1) verschobenen weiteren Lichtblatts (LB2, LB3), zur Beleuchtung eines weiteren Streifens der Probe (1) und zur Anregung einer Fluoreszenzstrahlung in diesem weiteren Streifen der Probe (1) und
   - **dass** die Detektionsvorrichtung (4) eingerichtet ist, die im ersten Streifen der Probe (1) durch das erste Lichtblatt (LB1) und die im weiteren Streifen der Probe (1) durch das weitere Lichtblatt (LB2, LB3) angeregte Fluoreszenzstrahlung gleichzeitig zu detektieren.

2. Anordnung zur Lichtblattmikroskopie nach Anspruch 1, **gekennzeichnet durch** eine Detektionsvorrichtung (4), die eine dem ersten Lichtblatt (LB1) zugeordnete erste Detektionsebene und eine dem weiterem Lichtblatt (LB2, LB3) zugeordnete weitere Detektionsebene enthält und eingerichtet ist zur gleichzeitigen kongruenten Deckung einer ersten Fokusebene des ersten Lichtblatts (LB1) mit der ersten Detektionsebene und einer weiteren Fokusebene des weiteren Lichtblatts (LB2, LB3) mit einer weiteren Detektionsebene.

3. Anordnung zur Lichtblattmikroskopie nach einem der Ansprüche 1 bis 2, wobei die durch das erste Lichtblatt (LB1) und die durch das parallel angeordnete weitere Lichtblatt (LB2, LB3) angeregte Fluoreszenzstrahlung einander in Detektionsrichtung nicht überlagert ist, und dem ersten (LB1) und dem weiteren Lichtblatt (LB2, LB3) jeweils eine getrennte Sensorposition (SP1, SP2, SP3) des Sensors (6) zugeordnet ist.

4. Anordnung zur Lichtblattmikroskopie nach einem der Ansprüche 1 bis 3, wobei die Detektionsvorrichtung (4) Mittel für eine spektrale Detektion und/oder die Detektionsvorrichtung (4) Mittel für eine konfokale Filterung und/oder die Beleuchtungsvorrichtung (3) Mittel für eine strukturierte Beleuchtung enthält.

5. Anordnung zur Lichtblattmikroskopie nach einem der Ansprüche 1 bis 4, wobei die Detektionsvorrichtung (4) ein Phasenelement (10, 10.1, 10.2) in einem Detektionsstrahlengang enthält.

6. Anordnung zur Lichtblattmikroskopie nach Anspruch 5, deren Abbildungsoptik ein Objektiv (5) enthält und in der zwischen dem Objektiv (5) und dem Sensor (6) ein Phasengitter (10.1) angeordnet ist oder ein räumlicher Lichtmodulator (10.2) mit einer Phasenfunktion in einem Ortsfrequenzraum oder in einem Ortsraum angeordnet ist.

7. Anordnung zur Lichtblattmikroskopie nach einem der Ansprüche 1 bis 4, wobei die Detektionsvorrichtung einen Sensor (6) enthält, der so eingerichtet ist, dass dem ersten Lichtblatt (LB1) ein erster Sensorbereich (6.1) und dem weiteren Lichtblatt (LB2, LB3) ein weiterer Sensorbereich (6.2, 6.3) zugeordnet ist, der gegenüber dem ersten Sensorbereich (6.1) entlang der Detektionsachse (9) verschoben angeordnet ist.

8. Anordnung zur Lichtblattmikroskopie nach einem der Ansprüche 1 bis 4, wobei die Detektionsvorrichtung (4) eine Faserplatte (11) umfasst, die Glasfasern enthält, deren erste Enden zum Einkoppeln der abgebildete Fluorenzenzstrahlung angeordnet sind, und deren entgegengesetzte Enden entweder in direkten Kontakt mit dem Sensor (6) stehen oder durch optische Mittel (12) auf den Sensor (6) abbildbar sind, wobei die Faserplatte (11) einen dem ersten Lichtblatt (LB1) zugeordneten ersten Faserplattenabschnitt (11.1) und einen dem weiteren Lichtblatt (LB2, LB3) zugeordneten weiteren Faserplattenabschnitt (11.2, 11.3) enthält, dessen Enden der Glasfasern zum Einkoppeln der Fluoreszenzstrahlung entlang der Detektionsachse (9) verschoben angeordnet sind.

9. Anordnung zur Lichtblattmikroskopie nach Anspruch 2 oder nach Anspruch 3 und weiter nach Anspruch 2 oder nach Anspruch 4 und weiter nach Anspruch 2, wobei die Detektionsvorrichtung (4) ein Mikrolinsenarray (13) zwischen einem Objektiv (5) der Abbildungsoptik und dem Sensor (6) umfasst, derart dass dem ersten Lichtblatt (LB1) eine erste Mikrolinse (13.1) einer ersten Art mit einer ersten Brechkraft und dem weiteren Lichtblatt (LB2, LB3) eine weitere Mikrolinse (13.2, 13.3) des Mikrolinsenarrays (13) einer weiteren Art mit einer weiteren Brechkraft zugeordnet ist, wobei die erste Brechkraft der ersten Mikrolinse (13.1) abhängig von der Lage der ersten Fokusebene und die weitere Brechkraft der weiteren Mikrolinse (13.2, 13.3) abhängig von der Lage der weiteren Fokusebene ist.

10. Anordnung zur Lichtblattmikroskopie nach Anspruch 4 und weiter nach Anspruch 2 wobei die Detektionsvorrichtung (4) einen Strahlteiler (14) in einem Detektionsstrahlengang aufweist, der derart angeordnet ist, dass er den Detektionsstrahlengang teilt und eine erste zu dem ersten Lichtblatt (LB1) zugeordnete und eine weitere zu einem weiteren Lichtblatt (LB2) zugeordnete weitere Fokusebene nebeneinander auf dem Sensor (6) abgebildet werden.

11. Anordnung zur Lichtblattmikroskopie nach einem der Ansprüche 1 bis 10, eingerichtet zur Durchführung eines Volumenscans der Probe (1).

12. Anordnung zur Lichtblattmikroskopie nach Anspruch 11, die Mittel zur Durchführung einer Relativbewegung zwischen den Lichtblättern (LB1, LB2, LB3) und der Probe (1) entlang einer Achse parallel zur Probenebene (2.1) und/oder zu einem Objektträger (2) enthält.

13. Anordnung zur Lichtblattmikroskopie nach Anspruch 11 oder 12, die Mittel zur Durchführung einer Relativbewegung zwischen den Lichtblättern (LB1, LB2, LB3) und der Probe (1) entlang einer Achse parallel zur Detektionsrichtung enthält und/oder die Mittel zur Durchführung einer Relativbewegung zwischen den Lichtblättern (LB1, LB2, LB3) und der Probe (1) entlang einer Achse senkrecht zur Probenebene (2.1) und/oder zu einem Objektträger (2) enthält.

14. Anordnung zur Lichtblattmikroskopie nach einem der Ansprüche 1 bis 13, wobei des erste und das weitere Lichtblatt (LB1, LB2, LB3) auf Gauss-Strahlen oder Besselstrahlen oder Mathieu-Strahlen oder Sinc$^3$-Strahlen basiert.

15. Anordnung zur Lichtblattmikroskopie nach einem der Ansprüche 1 bis 14, wobei eine Länge des ersten und/oder des weiteren Lichtblatts (LB1, LB2, LB3) an eine Dicke (d) der Probe (1) angepasst ist.

16. Verfahren zur Lichtblattmikroskopie bei dem eine Probe (1) mit mindestens zwei zueinander parallel und zu einer Detektionsachse (9) senkrecht angeordneten, jedoch in Detektionsrichtung, also entlang der Detektionsachse, wie auch in Beleuchtungsrichtung zueinander verschobenen Lichtblättern (LB1, LB2, LB3) beleuchtet wird, diese Lichtblätter (LB1, LB2, LB3) in den jeweiligen Streifen der Probe (1) eine Fluoreszenzstrahlung erzeugen, die mit einer Abbildungsoptik (5,7) in eine Fokusebene abgebildet wird und die mit einem Sensor (6) detektiert wird, wobei zur Detektion der Fluoreszenzstrahlung des jeweiligen Streifens der Probe (1) die Fokusebene eines Lichtblatts (LB1, LB2, LB3) mit einer Detektionsebene des jeweiligen Lichtblatts (LB1, LB2, LB3) in Übereinstimmung gebracht wird, wobei die in den jeweiligen Streifen der Probe (1) angeregten Fluoreszenzstrahlungen gleichzeitig detektiert werden.

17. Verfahren zur Lichtblattmikroskopie nach Anspruch 16, bei dem eine Anordnung zur Lichtblattmikroskopie nach einem der Ansprüche 1 bis 15 eingesetzt wird.

## Claims

1. Arrangement for light sheet microscopy, comprising

   - a specimen plane (2.1) for arranging a specimen (1),
   - an illumination apparatus (3) having a light source and an illumination optical unit, configured for producing a first light sheet (LB1) which extends in non-parallel fashion in relation to the specimen plane (2.1), for illuminating a first stripe of the specimen (1) and for exciting fluorescence radiation in this first stripe of the specimen (1), and
   - a detection apparatus (4) having a sensor (6) for detecting the fluorescence radiation, having an imaging optical unit for imaging the fluorescence radiation from the first stripe of the specimen (1) into a detection plane of the sensor (6), and having a detection axis (9) which forms an angle with the first light sheet from an angle range of 70° to 110°, in particular having a detection axis (9) that is perpendicular to the first light sheet,

   **characterized**

   - **in that** the illumination apparatus (3) is configured to produce at least one further light sheet (LB2, LB3) that is arranged parallel to the first light sheet (LB1) but displaced in relation to the first light sheet (LB1) in the detection direction, i.e. along the detection axis (9), and in the illumination direction (8), for illuminating a further stripe of the specimen (1) and for exciting fluorescence radiation in this further stripe of the specimen (1), and

- **in that** the detection apparatus (4) is configured to detect simultaneously the fluorescence radiation excited in the first stripe of the specimen (1) by the first light sheet (LB1) and the fluorescence radiation excited in the further stripe of the specimen (1) by the further light sheet (LB2, LB3).

2. Arrangement for light sheet microscopy according to Claim 1, **characterized by** a detection apparatus (4) which contains a first detection plane that is assigned to the first light sheet (LB1) and a further detection plane that is assigned to the further light sheet (LB2, LB3) and which is configured for simultaneous congruent coverage of a first focal plane of the first light sheet (LB1) with the first detection plane and of a further focal plane of the further light sheet (LB2, LB3) with a further detection plane.

3. Arrangement for light sheet microscopy according to either of Claims 1 and 2, wherein the fluorescence radiation excited by the first light sheet (LB1) and the fluorescence radiation excited by the further light sheet (LB2, LB3) arranged in parallel are not superposed on one another in the detection direction and a separate sensor position (SP1, SP2, SP3) of the sensor (6) is assigned in each case to the first light sheet (LB1) and the further light sheet (LB2, LB3).

4. Arrangement for light sheet microscopy according to any one of Claims 1 to 3, wherein the detection apparatus (4) contains means for spectral detection and/or the detection apparatus (4) contains means for confocal filtering and/or the illumination apparatus (3) contains means for structured illumination.

5. Arrangement for light sheet microscopy according to any one of Claims 1 to 4, wherein the detection apparatus (4) contains a phase element (10, 10.1, 10.2) in a detection beam path.

6. Arrangement for light sheet microscopy according to Claim 5, the imaging optical unit of which contains an objective (5) and in which a phase grating (10.1) is arranged between the objective (5) and the sensor (6) or there is a spatial light modulator (10.2) with a phase function in a spatial frequency space or in a real space.

7. Arrangement for light sheet microscopy according to any one of Claims 1 to 4, wherein the detection apparatus contains a sensor (6) that is configured in such a way that a first sensor region (6.1) is assigned to the first light sheet (LB1) and a further sensor region (6.2, 6.3) is assigned to the further light sheet (LB2, LB3), said further sensor region being arranged relative to the first sensor region (6.1) in a manner displaced along the detection axis (9).

8. Arrangement for light sheet microscopy according to any one of Claims 1 to 4, wherein the detection apparatus (4) comprises a fibre plate (11) containing glass fibres, the first ends of which are arranged for input coupling of the imaged fluorescence radiation and the opposite ends of which either are in direct contact with the sensor (6) or are imageable on the sensor (6) by optical means (12), wherein the fibre plate (11) contains a first fibre plate portion (11.1) assigned to the first light sheet (LB1) and a further fibre plate portion (11.2, 11.3) assigned to the further light sheet (LB2, LB3), the ends of the glass fibres of said further fibre plate portion for input coupling of the fluorescence radiation being arranged in a manner displaced along the detection axis (9) .

9. Arrangement for light sheet microscopy according to Claim 2 or according to Claim 3 and further according to Claim 2 or according to Claim 4 and further according to Claim 2, wherein the detection apparatus (4) comprises a microlens array (13) between an objective (5) of the imaging optical unit and the sensor (6) in such a way that a first microlens (13.1) of a first type with a first refractive power is assigned to the first light sheet (LB1) and a further microlens (13.2, 13.3) of the microlens array (13) of a further type with a further refractive power is assigned to the further light sheet (LB2, LB3), wherein the first refractive power of the first microlens (13.1) is dependent on the spatial orientation of the first focal plane and the further refractive power of the further microlens (13.2, 13.3) is dependent on the spatial orientation of the further focal plane.

10. Arrangement for light sheet microscopy according to Claim 4 and further according to Claim 2, wherein the detection apparatus (4) has a beam splitter (14) in a detection beam path, said beam splitter being arranged in such a way that it divides the detection beam path and a first focal plane assigned to the first light sheet (LB1) and a further further focal plane assigned to a further light sheet (LB2) are imaged next to one another on the sensor (6).

11. Arrangement for the light sheet microscopy according to any one of Claims 1 to 10, configured to carry out a volume scan of the specimen (1).

**12.** Arrangement for light sheet microscopy according to Claim 11, which contains means for carrying out a relative movement between the light sheets (LB1, LB2, LB3) and the specimen (1) along an axis parallel to the specimen plane (2.1) and/or to an object carrier (2).

**13.** Arrangement for light sheet microscopy according to Claim 11 or 12, which contains means for carrying out a relative movement between the light sheets (LB1, LB2, LB3) and the specimen (1) along an axis parallel to the detection direction and/or which contains means for carrying out a relative movement between the light sheets (LB1, LB2, LB3) and the specimen (1) along an axis perpendicular to the specimen plane (2.1) and/or to an object carrier (2).

**14.** Arrangement for the light sheet microscopy according to any one of Claims 1 to 13, wherein the first light sheet (LB1) and the further light sheet (LB2, LB3) are based on Gaussian beams or Bessel beams or Mathieu beams or sinc³ beams.

**15.** Arrangement for light sheet microscopy according to any one of Claims 1 to 14, wherein a length of the first light sheet (LB1) and/or of the further light sheet (LB2, LB3) is matched to a thickness (d) of the specimen (1).

**16.** Method for light sheet microscopy, wherein a specimen (1) is illuminated by at least two light sheets (LB1, LB2, LB3) that are arranged in parallel to one another and perpendicular to a detection axis (9) but which are displaced in relation to one another in the detection direction, i.e. along the detection axis, and in the illumination direction, these light sheets (LB1, LB2, LB3) produce fluorescence radiation in the respective stripes in the specimen (1), said fluorescence radiation being imaged by an imaging optical unit (5, 7) in a focal plane and being detected by a sensor (6), wherein the focal plane of a light sheet (LB1, LB2, LB3) is brought in correspondence with a detection plane of the respective light sheet (LB1, LB2, LB3) for detecting the fluorescence radiation of the respective stripe of the specimen (1), wherein the fluorescence radiation excited in the respective stripes of the specimen (1) is detected simultaneously.

**17.** Method for light sheet microscopy according to Claim 16, wherein use is made of an arrangement for light sheet microscopy according to any one of Claims 1 to 15.

**Revendications**

**1.** Ensemble pour la microscopie à feuillet lumineux, comprenant :

- un plan d'échantillon (2.1) sur lequel peut être placé un échantillon (1),
- un ensemble d'éclairage (3) présentant une source de lumière et une optique d'éclairage, conçu pour former un premier feuillet lumineux (LB1) non parallèle au plan d'échantillon (2.1) pour éclairer une première bande de l'échantillon (1) et pour exciter un rayonnement de fluorescence dans cette première bande de l'échantillon (1) et
- un ensemble de détection (4) présentant un capteur (6) de détection du rayonnement de fluorescence, une optique de formation d'image qui forme l'image du rayonnement de fluorescence de la première bande de l'échantillon (1) dans un plan de détection du capteur (6) et un axe de détection (9) qui forme avec le premier feuillet lumineux un angle d'une valeur de 70° à 110°, et en particulier un axe de détection (9) perpendiculaire au premier feuillet lumineux,

**caractérisé en ce que**

- l'ensemble d'éclairage (3) est conçu pour former au moins un autre feuillet lumineux (LB2, LB3) parallèle au premier feuillet lumineux (LB1) mais décalé par rapport au premier feuillet lumineux (LB1) dans la direction de détection, et donc le long de l'axe de détection (9) ainsi que dans la direction d'éclairage (8), pour éclairer une autre bande de l'échantillon (1) et pour exciter un rayonnement de fluorescence dans cette autre bande de l'échantillon (1), et
- **en ce que** l'ensemble de détection (4) est conçu pour détecter simultanément les rayonnements de fluorescence excités dans la première bande de l'échantillon (1) par le premier feuillet lumineux (LB1) et dans l'autre bande de l'échantillon (1) par l'autre feuillet lumineux (LB2, LB3).

**2.** Ensemble pour la microscopie à feuillet lumineux selon la revendication 1, **caractérisé par** un ensemble de détection (4) qui contient un premier plan de détection associé au premier feuillet lumineux (LB1) et un autre plan de détection associé à l'autre feuillet lumineux (LB2, LB3) et qui est conçu pour couvrir simultanément et de manière congruente un premier plan focal du premier feuillet lumineux (LB1) avec le premier plan de détection et un autre plan focal de l'autre feuillet lumineux (LB2, LB3) avec un autre plan de détection.

**3.** Ensemble pour la microscopie à feuillet lumineux selon l'une des revendications 1 et 2, dans lequel le rayonnement de fluorescence excité par le premier feuillet lumineux (LB1) et le rayonnement de fluorescence excité par l'autre feuillet lumineux (LB2, LB3) disposé parallèlement ne se superposent pas l'un l'autre dans la direction de détection, des positions distinctes (SP1, SP2, SP3) du capteur (6) étant associées respectivement au premier feuillet lumineux (LB1) et à l'autre feuillet lumineux (LB2, LB3).

4. Ensemble pour la microscopie à feuillet lumineux selon l'une des revendications 1 à 3, dans lequel l'ensemble de détection (4) contient des moyens de détection spectrale et/ou l'ensemble de détection (4) contient des moyens de filtrage confocal et/ou l'ensemble d'éclairage (3) contient des moyens d'éclairage structuré.

5. Ensemble pour la microscopie à feuillet lumineux selon l'une des revendications 1 à 4, dans lequel l'ensemble de détection (4) contient un élément de déphasage (10, 10.1, 10.2) dans un parcours des rayons de détection.

6. Ensemble pour la microscopie à feuillet lumineux selon la revendication 5, dont l'optique de formation d'image contient un objectif (5) et dans lequel une grille de déphasage (10.1) est disposée entre l'objectif (5) et le capteur (6) ou un modulateur spatial de lumière (10.2) à fonction de déphasage est disposé dans l'espace de fréquences local ou dans l'espace local.

7. Ensemble pour la microscopie à feuillet lumineux selon l'une des revendications 1 à 4, dans lequel l'ensemble de détection contient un capteur (6) conçu de telle sorte qu'une première plage (6.1) du capteur est associée au premier feuillet lumineux (LB1) et une autre plage (6.2, 6.3) du capteur décalée le long de l'axe de détection (9) par rapport à la première plage (6.1) du capteur est associée à l'autre feuillet lumineux (LB2, LB3).

8. Ensemble pour la microscopie à feuillet lumineux selon l'une des revendications 1 à 4, dans lequel l'ensemble de détection (4) comporte une plaque de fibres (11) qui contient des fibres de verre dont les premières extrémités sont disposées de manière à recevoir l'image du rayonnement de fluorescence et dont les extrémités opposées sont en contact direct avec le capteur (6) ou peuvent avoir leur image formée sur le capteur (6) par des moyens optiques (12), la plaque de fibres (11) contenant une première partie de plaque (11.1) associée au premier feuillet lumineux (LB1) et une autre partie de plaque (11.2, 11.3) associée à l'autre feuillet lumineux (LB2, LB3) et dont les extrémités des fibres de verre sont décalées le long de l'axe de détection (9) pour recevoir le rayonnement de fluorescence.

9. Ensemble pour la microscopie à feuillet lumineux selon la revendication 2 ou la revendication 3, en outre selon la revendication 2 ou la revendication 4, en outre selon la revendication 2, dans lequel l'ensemble de détection (4) comporte une batterie (13) de microlentilles entre un objectif (5) de l'optique de formation d'image et le capteur (6), de telle sorte qu'au premier feuillet lumineux (LB1) soit associée une première microlentille (13.1) d'un premier type et d'un premier indice de réfraction et qu'à l'autre feuillet lumineux (LB2, LB3) soit associée une autre microlentille (13.2, 13.3) de la batterie (13) de microlentilles, d'un autre type et d'un autre indice de réfraction, le premier indice de réfraction de la première microlentille (13.1) dépendant de la position du premier plan focal et l'autre indice de réfraction de l'autre microlentille (13.2, 13.3) dépendant de la position de l'autre plan focal.

10. Ensemble pour la microscopie à feuillet lumineux selon la revendication 4 et en outre selon la revendication 2, dans lequel l'ensemble de détection (4) présente dans un parcours des rayons de détection un diviseur de faisceau (14) disposé de telle sorte qu'il divise le parcours des rayons de détection et que les images d'un premier plan focal associé au premier feuillet lumineux (LB1) et d'un autre plan focal associé à un autre feuillet lumineux (LB2) soient formées l'une à côté de l'autre sur le capteur (6).

11. Ensemble pour la microscopie à feuillet lumineux selon l'une des revendications 1 à 10, conçu pour réaliser un balayage du volume de l'échantillon (1).

12. Ensemble pour la microscopie à feuillet lumineux selon la revendication 11, contenant des moyens pour réaliser un déplacement relatif entre les feuillets lumineux (LB1, LB2, LB3) et l'échantillon (1) le long d'un axe parallèle au plan d'échantillon (2.1) et/ou parallèle à un porte-objet (2).

13. Ensemble pour la microscopie à feuillet lumineux selon les revendications 11 ou 12, contenant des moyens pour réaliser un déplacement relatif entre les feuillets lumineux (LB1, LB2, LB3) et l'échantillon (1) le long d'un axe parallèle à la direction de détection et/ou contenant des moyens pour réaliser un déplacement relatif entre les feuillets lumineux (LB1, LB2, LB3) et l'échantillon (1) le long d'un axe perpendiculaire au plan d'échantillon (2.1) et/ou perpendiculaire à un porte-objet (2).

14. Ensemble pour la microscopie à feuillet lumineux selon l'une des revendications 1 à 13, dans lequel le premier et l'autre feuillets lumineux (LB1, LB2, LB3) sont basés sur des rayons de Gauss, des rayons de Bessel, des rayons de Mathieu ou des rayons sinc[3].

15. Ensemble pour la microscopie à feuillet lumineux selon l'une des revendications 1 à 14, dans lequel la longueur du premier et/ou de l'autre feuillet lumineux (LB1, LB2, LB3) est adaptée à l'épaisseur (d) de l'échantillon (1).

16. Procédé de microscopie à feuillet lumineux, dans lequel un échantillon (1) est éclairé par au moins deux feuillets lumineux (LB1, LB2, LB3) mutuellement parallèles et perpendiculaires à un axe de détection (9) mais décalés mutuellement dans la direction de détection, c'est-à-dire le long de l'axe de détection, ainsi que dans la direction d'éclairage, ces feuillets lumineux (LB1, LB2, LB3) formant dans chacune des bandes de l'échantillon (1) un rayonnement de fluorescence dont l'image est formée dans un plan focal par une optique de formation d'image (5, 7) et est détectée par un capteur (6), le plan focal d'un feuillet lumineux (LB1, LB2, LB3) étant amené en correspondance avec un plan de détection du feuillet lumineux (LB1, LB2, LB3) respectif pour la détection du rayonnement de fluorescence de chaque bande de l'échantillon (1), les rayonnements de fluorescence excités dans chacune des bandes de l'échantillon (1) étant détectés simultanément.

17. Procédé de microscopie à feuillet lumineux selon la revendication 16, qui recourt à un ensemble pour la microscopie à feuillet lumineux selon l'une des revendications 1 à 15.

Fig. 2

Fig. 1

Fig. 3

**Fig. 4**

Fig. 5

**Fig. 6**

**Fig. 7**

EP 3 304 167 B1

Fig. 8

Fig. 9

**Fig. 10**

Fig. 11

EP 3 304 167 B1

**Fig. 12a**

LB1    LB2    LB3

1

2

16

**Fig. 12b**

LB1    LB2    LB3
$t_1$ $t_2$ $t_3$    $t_1$ $t_2$ $t_3$    $t_1$ $t_2$ $t_3$

1

16

2

**Fig. 12c**

$t_1$    $t_1$    $t_1$
$t_2$    $t_2$    $t_2$
$t_3$    $t_3$    $t_3$

LB1    LB2    LB3

1

2

16

Fig. 13

Fig. 14

Fig. 16a

Fig. 16b

Fig. 15a

Fig. 15b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004053558 A1
- WO 2012110488 A2
- WO 2012122027 A2
- DE 102013107297 A1
- DE 102013107298 A1
- DE 102009060490 A1
- WO 2014005682 A2

**In der Beschreibung aufgeführte Nicht-Patentliteratur**

- **HUISKEN et al.** *Development,* 2009, vol. 136, 1963
- **VON MOHAN ; MOHAN, K. ; PURNAPATRA, S. B. ; MONDAL, P. P. et al.** hree dimensional fluorescence imaging using multiple light-sheet microscopy. *PLOS ONE,* 2014, vol. 9, 1-8
- **VON GUSTAFSSON.** Surpassing the lateral resolution limit by a factor of two using structured illumination microscopy. *J.Microsc.,* 2000, vol. 198 (2), 82-87
- **VON CHEN et al.** Lattice light-sheet microscopy: Imaging molecules to embryos at high spatiotemporal resolution. *Science,* 2014, vol. 346 (6208), 1257998